# EUROPÄISCHE PATENTSCHRIFT

(11) **EP 4 347 343 B1**
(45) Veröffentlichungstag und Bekanntmachung des Hinweises auf die Patenterteilung: **17.12.2025**
(21) Anmeldenummer: 22730185.0
(22) Anmeldetag: 20.05.2022
(51) Int. Cl.: B60W 30/12, B60W 40/068, B60W 50/14, G08G 1/16, B60R 21/013

(54) **VERFAHREN ZUM AUTOMATISCHEN DURCHFÜHREN VON SICHERHEITSMASSNAHMEN BEI EINEM BEFAHREN EINES BANKETTS MIT EINEM FAHRZEUG, SOWIE ELEKTRONISCHES FAHRZEUGFÜHRUNGSSYSTEM UND FAHRZEUG**
METHOD FOR AUTOMATICALLY CARRYING OUT SAFETY MEASURES WHEN A VEHICLE DRIVES ON A SHOULDER, ELECTRONIC VEHICLE GUIDANCE SYSTEM, AND VEHICLE
PROCÉDÉ D'EXÉCUTION AUTOMATIQUE DE MESURES DE SÉCURITÉ LORS DU PASSAGE D'UN VÉHICULE SUR UN ACCOTEMENT, SYSTÈME DE GUIDAGE DE VÉHICULE ÉLECTRONIQUE ET VÉHICULE

(30) Priorität: 31.05.2021 DE 102021205553
(43) Veröffentlichungstag der Anmeldung: 10.04.2024
(73) Patentinhaber: VOLKSWAGEN AKTIENGESELLSCHAFT, 38440 Wolfsburg (DE)
(72) Erfinder: BÄRECKE, Frank, 38444 Wolfsburg (DE); SIMON, Steve, 38446 Wolfsburg (DE); KOLMS, Thomas, 38553 Wasbüttel (DE)
(86) Internationale Anmeldenummer: PCT/EP2022/063754
(87) Internationale Veröffentlichungsnummer: WO 2022/253596

(56) Entgegenhaltungen:
- EP-A1- 3 738 852
- DE-A1- 102009 047 373
- DE-A1- 102012 109 310
- DE-B3- 102019 206 875

## Beschreibung

Die Erfindung betrifft ein Verfahren zum automatischen Durchführen von Sicherheitsmaßnahmen bei einem Befahren eines zu einer Fahrbahn verschiedenen Banketts mit einem Fahrzeug.

Des Weiteren betrifft die Erfindung ein elektronisches Fahrzeugführungssystem mit einer Fassungseinheit und einer elektronischen Auswerteeinheit. Des Weiteren betrifft die Erfindung ein Fahrzeug mit einem entsprechenden elektronischen Fahrzeugführungssystem.

Beispielsweise ist aus der DE 10 2010 015 547 B4 ein Verfahren und eine Vorrichtung zur Ansteuerung mindestens einer reversiblen Insassenschutzvorrichtung eines Fahrzeugs und wobei die mindestens eine reversible Insassenschutzvorrichtung in Abhängigkeit erfasster Fahrzustandsgrößen angesteuert und in eine Wirkstellung positioniert wird.

Die US 2014/026 38 00 A1 offenbart ein Verfahren zum automatischen Gurtstraffen.

Die US 9,290,174 B1 offenbart ein Verfahren um negative Auswirkungen eines unaufmerksamen Fahrers zu reduzieren.

Die DE 10 2019 206 875 B3 offenbart zur zuverlässigen Detektion einer Bankettfahrt ein Verfahren. Hierbei wird wenigstens eine Messgröße mittels wenigstens einer Sensoreinheit eines Kraftfahrzeugs erfasst.

Ferner offenbart die DE 10 2009 047 373 A1 ein Verfahren zur Aktivierung und/oder Ansteuerung von mindestens einer reversiblen Rückhalteeinrichtung eines Kraftfahrzeugs in Abhängigkeit von einer erkannten Gefahr.

Eine Aufgabe der vorliegenden Erfindung besteht darin, die Sicherheit von Passagieren eines Fahrzeuges beim Befahren eines Banketts durch das Fahrzeug zu verbessern.

Diese Aufgabe wird durch ein Verfahren, ein elektronisches Fahrzeugführungssystem sowie ein Fahrzeug gemäß den unabhängigen Patentansprüchen gelöst. Sinnvolle Weiterbildungen ergeben sich aus den abhängigen Patentansprüchen.

Ein Aspekt der Erfindung betrifft ein Verfahren zum automatischen Durchführen von Sicherheitsmaßnahmen bei einem Befahren eines zu einer Fahrbahn verschiedenen Banketts mit einem Fahrzeug, aufweisend folgende Schritte:
- Erfassen des zur Fahrbahn verschiedenen Banketts, welches seitlich an die Fahrbahn angrenzend angeordnet ist, durch eine Erfassungseinrichtung des Fahrzeugs,
- Bereitstellen einer Information bezüglich einer Position und/oder einer Art des Banketts an das Fahrzeug,
- Erkennen des Befahrens des Banketts mit dem Fahrzeug durch eine elektronische Auswerteeinheit,
- Beurteilen einer Gefahrensituation, die durch das Befahren des Banketts des Fahrzeugs einhergeht und/oder zukünftig einhergehen kann, durch die elektronische Auswerteeinheit,
- Durchführen einer Sicherheitsmaßnahme indem eine Straffung zumindest eines Sicherheitsgurts eines Rückhaltesystems des Fahrzeugs in Abhängigkeit von der beurteilten Gefahrensituation erfolgt.

Durch das vorgeschlagene Verfahren können Passagiere, insbesondere der Fahrer, eines Fahrzeuges bei einem unbeabsichtigten Verlassen der Fahrbahn in einem daneben verlaufenden Bankett besser vor gefährlichen Situationen geschützt werden. Folglich kann durch das vorgeschlagene Verfahren bei einer Bankettfahrt des Fahrzeuges in dem Bankett die Sicherheit deutlich erhöht werden. Zusätzlich zu der Sicherung der Passagiere durch die Straffung des jeweiligen Sicherheitsgurts wird insbesondere der Fahrer des Fahrzeuges durch die Straffung des Gurtes aufmerksam gemacht. Folglich wird durch die Straffung nicht nur der Fahrer in einem Fahrersitz gesichert und stabilisiert, sondern zusätzlich wird die Aufmerksamkeit auf die jeweilige Gefahrensituation, insbesondere hinsichtlich der Bankettfahrt, erhöht. Beispielsweise kann durch die jeweilige Sicherung durch die Straffung des Sicherheitsgurtes genutzt werden, um den Fahrer oder andere Passagiere des Fahrzeuges auf die jeweilige beurteilte Gefahrensituation hinzuweisen und damit die Aufmerksamkeit auf die aktuelle Fahraufgabe zu lenken. Durch diese erhöhte Aufmerksamkeit des Fahrers kann eine Gefahr des Befahrens in dem Bankett reduziert werden, da durch die Aufmerksamkeit des Fahrers frühzeitiger entsprechende Gegenmaßnahmen eingeleitet, insbesondere durchgeführt, werden können.

Unter einem Bankett ist eine im Straßenquerschnitt einer Straße der neben einer Fahrbahn befindliche Teil der Straßenkrone zu verstehen. Das Bankett kann zeitlich oft durch eine Böschung begrenzt sein. Das Bankett dient insbesondere nicht dem Fahrzeugverkehr, sondern dient zum Ableiten einer des Oberflächenwassers der Fahrbahn zu den seitlich zu der Fahrbahn gelegenen Mulden ab. Beispielsweise kann ein Bankett eine Regelbreite von 1,5 Meter aufweisen. Das Bankett kann eine übliche Neigung von 6% am höheren beziehungsweise 12% am tieferen Fahrbahnrand aufweisen. Insbesondere befindet sich das Bankett am äußeren Rand der Straßenkrone und schließt an den Randstreifen oder, falls vorhanden, an den Seitenstreifen an. Das Bankett kann meistens auf beiden Seiten der befestigten Fahrbahn angeordnet sein. Das Bankett kann als unbefestigter Seitenstreifen dienen und kann Einrichtungen der Straßenausstattung, wie beispielsweise Verkehrsbeschilderungen und/oder Schutzplanken, aufnehmen. Das Bankett dient insbesondere dazu, der befestigten Fahrbahn zusätzlichen Halt zu geben. Beispielsweise kann für einen Führer eines Fahrzeuges das Bankett durch seine Fahr- und Materialkontrast zu der Fahrbahn klar abgegrenzt sein. Beispielsweise kann das Bankett als Befestigung eine leichte Kies- oder Schottertragschicht aufweisen. Insbesondere dient das Bankett dazu, dass auf dem Bankett ein Kraftfahrzeug abgestellt werden kann, ohne dass der fließende Verkehr wesentlich beeinflusst wird. Insbesondere können Fußgänger, die sich auf dem Bankett aufhalten, um beispielsweise eine Notrufsäule zu erreichen, nicht gezwungen werden auf dem Randstreifen zu gehen.

Mit anderen Worten befindet sich seitlich zu einer Fahrbahn auf einem vorgegebenen Streifen jeweils das Bankett. Im Anschluss zu dem Bankett kann wiederum ein weiterer anderer Bereich vorliegen, wie beispielsweise eine Grünfläche oder eine Wiese oder ein Feldboden. Folglich ist das Bankett nicht als kompletter Umgebungsbereich neben der Fahrbahn anzusehen, sondern ist ein spezieller Streifen, der parallel zur Fahrbahn verläuft. Das Bankett kann ein in seiner Breite vorgegebener Bereich seitlich entlang der Fahrbahn sein.

Beispielsweise kann mit Hilfe des vorgeschlagenen Verfahrens der Fahrer des Fahrzeuges während einer Bankettfahrt des Fahrzeugs in dem Bankett automatisch, systemseitig unterstützt beziehungsweise assistiert werden. Beispielsweise kann dies durch ein elektronisches Fahrzeugführungssystem, insbesondere Fahrerassistenzsystem, automatisch durchgeführt werden. Somit kann die Sicherheit der Passagiere des Fahrzeuges und insbesondere der weiteren Verkehrsteilnehmer in der Umgebung des Fahrzeuges erhöht werden.

Insbesondere befindet sich das Fahrzeug während einer Fortbewegungsfahrt entlang der Fahrbahn, wobei während der Fortbewegungsfahrt durch die Erfassungseinrichtung des Fahrzeuges eine kontinuierliche Überwachung des Umgebungsbereichs des Fahrzeugs durchgeführt werden kann. Durch diese kontinuierliche Erfassung kann das zur Fahrbahn verschiedene Bankett erfasst werden. Insbesondere kann das Bankett mit Hilfe der Erfassungseinrichtung automatisch detektiert werden. Beispielsweise kann das Bankett parallel neben der Fahrbahn verlaufen. Bei der Erfassungseinrichtung des Fahrzeuges kann es sich beispielsweise um ein Sensorsystem oder um ein Kamerasystem handeln. Insbesondere kann die Erfassungseinrichtung mehrere Sensoren und/oder Kameras aufweisen. Insbesondere kann das Bankett durch eine Auswertung der erfassten Informationen ermittelt werden.

Insbesondere kann mit der elektronischen Auswerteeinheit in Abhängigkeit von den erfassten Informationen bezüglich des Banketts und/oder der bereitgestellten Informationen bezüglich der Position und/oder der Art des Banketts das Befahren des Banketts mit dem Fahrzeug erkannt beziehungsweise festgestellt werden. Insbesondere wird anhand der bereitgestellten beziehungsweise erfassten Informationen eine Ermittlung beziehungsweise Berechnung mit Hilfe der elektronischen Auswerteeinheit durchgeführt, sodass die Bankettfahrt des Fahrzeuges auf dem Bankett fest erkannt werden kann.

Bei der elektronischen Auswerteeinheit kann es sich beispielsweise um ein Auswertesystem, bestehend aus mehreren einzelnen Einheiten handeln. Beispielsweise kann die elektronische Auswerteeinheit als Recheneinheit bezeichnet werden. Mit Hilfe der elektronischen Auswerteeinheit kann eine effiziente Bestimmung des Befahrens des Banketts erfolgen. Insbesondere kann die elektronische Auswerteeinheit Bestandteil eines elektronischen Fahrzeugführungssystems des Fahrzeuges oder Bestandteil des Fahrzeugs sein. Ebenso denkbar ist, dass die elektronische Auswerteeinheit Teil eines zum Fahrzeug externen Servers oder Datenwolke ist. Folglich wird die Erkennung des Befahrens des Banketts nicht im Fahrzeug, sondern in einer zum Fahrzeug separat angeordneten Einheit durchgeführt. In diesem Falle kann zwischen dem Fahrzeug, insbesondere dem elektronischen Fahrzeugführungssystem, und der elektronischen Auswerteeinheit die jeweiligen Informationen, Daten und Signale über Kommunikationstechnische Verbindungen übermittelt werden.

Beispielsweise handelt es sich bei dem vorgeschlagenen Verfahren um ein computerimplementiertes Verfahren.

Beispielsweise können die Informationen bezüglich der Position oder der Art des Banketts durch eine zum Fahrzeug externe Datenwolke und/oder Servereinheit und/oder Serversystem bereitgestellt werden. Beispielsweise können diese Informationen von externen Informationsstellen dem Fahrzeug, insbesondere der elektronischen Auswerteeinheit, bereitgestellt werden. Insbesondere wird mit der Position des Banketts eine globale Position des Banketts, insbesondere auf einer Karte, bereitgestellt. Bei der Art des Banketts kann es sich beispielsweise um eine Oberflächenbeschaffenheit und/oder um eine Länge des Banketts und/oder um die Breite des Banketts und/oder um eine Neigung des Banketts und/oder um auf dem Bankett stehende Gegenstände handeln. Anhand der erfassten Informationen bezüglich des Banketts und der bereitgestellten Position und/oder Art des Banketts, kann die elektronische Auswerteeinheit eine präzise und verbesserte Bestimmung durchführen, ob das Fahrzeug tatsächlich das Bankett aktuell befährt.

Beispielsweise kann die elektronische Auswerteeinheit in Abhängigkeit von Umfeldinformationen in der Umgebung des Fahrzeugs und/oder von GPS-Positionen und/oder von Navigationsdaten erkennen, ob das Fahrzeug das Bankett aktuell befährt.

Mit Hilfe der elektronischen Auswerteeinheit kann anschließend an das Erkennen des Befahrens des Banketts beurteilt beziehungsweise bewertet werden, inwieweit eine Gefahrensituation vorliegt. Dabei zum einen die grundsätzliche Gefahrensituation beurteilt beziehungsweise bewertet und zusätzlich welches Gefahrenpotenzial vorliegt. Die Gefahrensituation geht gezielt beziehungsweise explizit durch das Befahren des Banketts einher. Somit wird mit der Gefahrensituation genau die aktuell vorhandene und/oder bevorstehende Bankettfahrt analysiert und bewertet. Bei der Beurteilung der Gefahrensituation wird insbesondere die jeweilige Gefahr für das Fahrzeug und/oder den Passagieren des Fahrzeuges berücksichtigt. Somit kann abgeschätzt werden, inwieweit das Fahrzeug und/oder die Passagiere des Fahrzeugs und/oder andere Verkehrsteilnehmer in der Umgebung des Fahrzeuges gefährdet werden durch das Befahren des Banketts durch das Fahrzeug.

Besonders vorteilhaft ist, wenn durch die elektronische Auswerteeinheit in Abhängigkeit von der verschiedensten erfassten und/oder bereitgestellten Informationen bezüglich des Befahrens des Banketts eine Vorhersage Prognose über eine zukünftige Gefahrensituation durchgeführt werden kann. Folglich kann die jeweilige Gefahrensituation beurteilt werden, wenn, insbesondere über einen längeren Zeitraum, das Bankett befahren wird. Durch diese Vorhersage dieser Gefahrensituation, insbesondere beim längeren Befahren des Banketts, können frühzeitig Sicherheitsmaßnahmen und/oder Gegenmaßnahmen eingeleitet werden und insbesondere die Passagiere des Fahrzeuges und/oder andere Verkehrsteilnehmer in der Umgebung des Fahrzeuges vor diesem Gefahrenpotenzial durch das Befahren des Banketts durch das Fahrzeug durchgeführt werden. Somit kann die Verkehrssicherheit und insbesondere die Sicherheit des Fahrzeuges und der Passagiere des Fahrzeuges verbessert, insbesondere deutlich erhöht werden.

Beispielsweise kann durch die elektronische Auswerteeinheit in Abhängigkeit von der beurteilten aktuellen und/oder zukünftigen Gefahrensituation ein entsprechendes Signal, insbesondere Steuersignal, generieren, mit welchem eine automatische Straffung des zumindest einen Sicherheitsgurtes des Rückhaltesystems des Fahrzeuges eingeleitet, insbesondere durchgeführt werden kann. Infolge dessen kann der Passagier frühzeitig gesichert und aufmerksam gemacht werden, indem unmittelbar nach der Beurteilung der Gefahrensituation eine automatische, systemseitige Straffung des Sicherheitsgurtes, insbesondere des Sicherheitsgurtes des Fahrzeugsitzes des Fahrers, durchgeführt wird. Somit ergibt sich eine verbesserte Sicherheit des Fahrzeugs und insbesondere der Passagiere auch bei einer aktuellen und/oder bevorstehenden Bankettfahrt.

In einem Ausführungsbeispiel der Erfindung ist vorgesehen, dass mit der Erfassungseinrichtung ein Umgebungsbereich in einer Umgebung des Fahrzeugs erfasst wird, und/oder mit einer Positionsbestimmungseinheit eine aktuelle Position des Fahrzeugs bestimmt wird. In Abhängigkeit von dem erfassten Umgebungsbereich und/oder von der bestimmten Position wird durch die elektronische Auswerteeinheit erkannt, ob sich das Fahrzeug zumindest bereichsweise, insbesondere vollständig, auf dem Bankett befindet, insbesondere ein Reibungskoeffizient eines Bodenbereichs, auf welchem das Fahrzeug aktuell fährt, bestimmt wird, wobei ein bestimmter Reibungskoeffizient für das Erkennen des Befahrens des Banketts berücksichtigt wird. Dadurch kann das Erkennen beziehungsweise Feststellen des Befahrens des Banketts besser, insbesondere effizienter, durchgeführt werden, da die verschiedensten Informationen berücksichtigt werden können.

Durch die Erfassungseinrichtung kann insbesondere der Umgebungsbereich in der Umgebung des Fahrzeugs kontinuierlich erfasst beziehungsweise überwacht werden, anhand dieser kontinuierlichen Erfassung kann frühzeitig das Bankett und das Befahren des Fahrzeugs auf dem Bankett erkannt werden. Dazu können beispielsweise die erfassten Bilder beziehungsweise Aufnahmen des Umgebungsbereichs dahingehend ausgewertet werden, ob sich das Fahrzeug teilweise oder vollständig auf dem Bankett befindet. Dies erfolgt mit Hilfe der elektronischen Auswerteeinheit, insbesondere mit Hilfe einer Bildverarbeitungseinheit der elektronischen Auswerteeinheit.

Zusätzlich oder anstatt dazu wird mittels der Positionsbestimmungseinheit die aktuelle Position des Fahrzeugs bestimmt. Anhand der aktuellen Position des Fahrzeugs kann beispielsweise durch Verkehrskarten und/oder digitale Karten die aktuelle Position des Fahrzeugs mit der Position des Banketts verglichen werden. In Abhängigkeit von diesem Vergleich kann somit festgestellt werden, ob sich das Fahrzeug teilweise oder vollständig auf dem Bankett befindet. Beispielsweise handelt es sich bei der Positionsbestimmungseinheit um ein globales Navigationssatellitensystem (GNSS). Insbesondere kann die Positionsbestimmungseinheit im Fahrzeug, insbesondere im elektronischen Fahrzeugführungssystem, integriert sein. Ebenso kann die Positionsbestimmungseinheit Bestandteil der elektronischen Auswerteeinheit sein. Ebenso denkbar ist, dass es sich bei der Positionsbestimmungseinheit um eine eigenständige separate Einheit, wie beispielsweise ein Servicesystem oder eine Daten- oder eine Cloudanwendung, handelt. Diese kann die jeweilige Position des Fahrzeuges extern zum Fahrzeug bestimmen und beispielsweise über kommunikationstechnische Verbindungen dem Fahrzeug und/oder der elektronischen Auswerteeinheit übermitteln und bereitstellen.

Eine weitere Möglichkeit der Feststellung der Bankettfahrt ist der Vergleich des Reibungskoeffizienten des Bodenbereichs, auf welchem das Fahrzeug aktuell fährt. Dabei wird hier angewendet, dass die Fahrbahn und das Bankett unterschiedliche Reibungskoeffizienten beziehungsweise Reibwerte aufweisen. Beispielsweise kann mit einer Erfassungseinheit beziehungsweise Sensoreinheit des Fahrzeugs oder mit einem anderweitigen elektronischen System des Fahrzeuges oder eines zum Fahrzeug externen Systems der aktuelle Reibungskoeffizient des Bodenbereichs ermittelt beziehungsweise berechnet werden. Dieser ermittelte Reibungskoeffizient kann durch vorgegebene Werte verglichen werden. Diese können beispielsweise in einer hierzu bereitgestellten elektronischen Datenbank durch die elektronische Auswerteeinheit erfolgen. Dabei können spezielle Werte vorgegeben werden, auf welche eine Bankettfahrt geschlossen werden kann. Sollte der ermittelte Reibungskoeffizient mit einem vorgegebenen Wert eines Banketts übereinstimmen, so kann die elektronische Auswerteeinheit feststellen beziehungsweise erkennen, dass das Fahrzeug auf dem Bankett aktuell fährt.

In einem Ausführungsbeispiel der Erfindung ist des Weiteren vorgesehen, dass in Abhängigkeit von der beurteilten Gefahrensituation Verkehrsteilnehmer in einer Umgebung des Fahrzeugs durch eine Beleuchtungseinrichtung des Fahrzeugs optisch, insbesondere vor dem Befahren des Banketts durch das Fahrzeug gewarnt werden. Insbesondere wird in Abhängigkeit von der beurteilten Gefahrensituation ein akustischer und/oder optischer und/oder haptischer Warnhinweis eines fahrenden Fahrzeugs durch eine elektronische Ausgabeeinheit ausgegeben. Insbesondere der Fahrer über die Straffung des zumindest einen Sicherheitsgurts informiert wird. Beispielsweise kann durch die elektronische Auswerteeinheit unmittelbar nach der Beurteilung der Gefahrensituation ein entsprechendes Steuersignal an eine Beleuchtungseinrichtung des Fahrzeuges und/oder einem anderen Fahrzeugsystem und/oder Fahrzeugkomponenten des Fahrzeugs übermitteln. Bei der Beleuchtungseinrichtung kann es sich beispielsweise um eine Umfeldbeleuchtung und/oder eine Kennleuchte und/oder einen Scheinwerfer und/oder Rückstrahler des Fahrzeugs handeln. Insbesondere handelt es sich bei der Beleuchtungseinrichtung um eine Warnblinkeinrichtung und/oder einen Warnblinker des Fahrzeugs. Dadurch können Verkehrsteilnehmer in der Umgebung des Fahrzeuges automatisch gewarnt werden, sodass sich diese anderen Verkehrsteilnehmer vor einer möglichen Gefahr durch das Befahren des Fahrzeuges in dem Bankett einstellen können. Somit können die weiteren Verkehrsteilnehmer entsprechende Gegenmaßnahmen und/oder Sicherheitsmaßnahmen, insbesondere Bremseingriffe, vorbereiten oder durchführen. Dadurch ergibt sich eine erhöhte Sicherheit in dem Straßenverkehr. Insbesondere wird folglich das Umfeld des Fahrzeuges mit Hilfe eines Warnblinkers optisch gewarnt. Ebenso denkbar ist, dass durch akustische Systeme des Fahrzeuges ein akustischer Warnhinweis an die Verkehrsteilnehmer ausgegeben wird. Hierbei wäre beispielsweise das Betätigen der Hupe vorteilhaft. Somit ergibt sich eine verbesserte Wahrnehmung der bevorstehenden Gefahr beziehungsweise Gefahrensituation auch für die anderen Verkehrsteilnehmer.

Ebenso kann der Fahrer des Fahrzeuges und/oder die Passagiere des Fahrzeuges automatisch über die bevorstehende Gefahrensituation akustisch und/oder optisch und/oder haptisch gewarnt werden. Somit können die Passagiere, insbesondere der Fahrer, auf die Gefahr der aktuellen oder bevorstehenden Bankettfahrt hingewiesen werden, sodass noch entsprechende Gegenmaßnahmen eingeleitet und/oder durchgeführt werden können. Hierbei kann die Warnung über eine elektronische Ausgabeeinheit erfolgen. Bei der elektronischen Ausgabeeinheit kann es sich beispielsweise um ein mobiles Endgerät des Fahrers oder eines Passagiers des Fahrzeugs handeln. Ebenfalls können Fahrzeuglautsprecher und/oder Fahrzeugdisplays für die Ausgabe von Warnhinweisen verwendet werden. Hierbei kann beispielsweise das Infotainmentsystem des Fahrzeuges zur Warnung der Passagiere und des Fahrers verwendet werden. Ebenso kann über die bevorstehende oder die aktuelle Befahrung des Banketts auch eine Information bezüglich der automatischen Straffung der Sicherheitsgurte durchgeführt werden. Somit können die Passagiere und/oder der Fahrer davor informiert oder darauf hingewiesen werden, dass eine automatische Straffung des Gurtes durchgeführt wird und sich der Fahrer oder die Passagiere nicht darüber wundern oder sogar erschrecken.

In einem weiteren Ausführungsbeispiel der Erfindung ist vorgesehen, dass für das Beurteilen der Gefahrensituation des erkannten Befahrens des Banketts eine Klassifizierungs-Datenbank berücksichtigt wird, wobei mittels der Klassifizierungs-Datenbank die Gefahrensituation klassifiziert wird, sodass die Gefahrensituation des Befahrens des Banketts einem ersten Gefahrenszenario gemäß einer ersten Klasse oder zumindest einem zweiten Gefahrenszenario gemäß einer zweiten Klasse zugeordnet werden kann. Dadurch kann eine genauere und situationsabhängige Beurteilung der Gefahrensituation und der entsprechenden Sicherheitsmaßnahmen durchgeführt werden. Für die Klassifizierung der Gefahrensituation können die umfangreichsten Informationen berücksichtigt werden. Beispielsweise kann hierzu die Art des Banketts und/oder die Art des Fahrzeuges und/oder die Umgebungsinformationen und/oder eine Beschaffenheit des Banketts und/oder Hindernisse auf dem Bankett und/oder die aktuelle Geschwindigkeit des Fahrzeuges und/oder eine Anzahl und/oder eine Art von Fahrerassistenzsystem des Fahrzeuges berücksichtigt werden. Somit kann das genaue Gefahrenpotenzial beziehungsweise Gefahrenlevel der Gefahrensituation besser beurteilt und eingeschätzt beziehungsweise abgeschätzt werden. Dies erfolgt insbesondere mit Hilfe der elektronischen Auswerteeinheit beispielsweise kann die Klassifizierungs-Datenbank Teil der elektronischen Auswerteeinheit oder als externe Datenwolke oder Servicesystem fungieren. Mit Hilfe der Klassifizierungs-Datenbank kann die aktuelle Gefahrensituation klassifiziert und in verschiedenen Gefahrenstufen eingeteilt werden. Durch die Einteilung der Gefahrensituation in verschiedene Gefahrenszenarien können verschiedene Sicherheitsmaßnahmen und/oder Vorgehensweisen für die aktuelle beziehungsweise bevorstehende Bankettfahrt des Fahrzeuges angewendet werden. Dabei können in der Klassifizierungs-Datenbank verschiedene Maßnahmen und/oder Gegenmaßnahmen für die jeweiligen Gefahrenszenarien bereitgestellt werden. Somit kann nach der Klassifizierung der Gefahrensituation unverzüglich entsprechende Gegenmaßnahmen und/oder Sicherheitsmaßnahmen bereitgestellt werden, da diese bereits durch die Klassifizierungs-Datenbank bereitgestellt werden. Somit können Verarbeitungs- beziehungsweise Rechenschritte reduziert werden, da die zu den jeweiligen Gefahrenszenarien zugehörige Maßnahme bereits im Vorfeld bekannt sind. Somit können die Sicherheitsmaßnahmen schneller und besser ausgeführt werden, sodass sich die Sicherheit der Passagiere des Fahrzeugs erhöht. Insbesondere können die Gefahrensituationen in den mehreren verschiedensten Gefahrenszenarien unterteilt und zugeordnet werden. Dabei kann beispielsweise je nach Schwere beziehungsweise Höhe der Gefahr ebenso eine Priorisierung der jeweiligen Gefahrenszenarien durchführen, sodass in Abhängigkeit von bestimmten Parametern die Schwere der bevorstehenden Gefahrensituation eingeschätzt werden kann.

In einem weiteren Ausführungsbeispiel ist vorgesehen, dass in Abhängigkeit von der klassifizierten Gefahrensituation zumindest ein elektronisches Fahrassistenzsystem dynamisch angepasst wird, sodass mit dem zumindest einen elektronischen Fahrassistenzsystem automatisch weitere Sicherheitsmaßnahmen eingeleitet, insbesondere durchgeführt, werden. Insbesondere wird als eine weitere Sicherheitsmaßnahme eine Stabilisierung einer Sitzposition zumindest eines Passagiers des Fahrzeugs in einem Fahrzeugsitz durchgeführt, insbesondere ab dem Erkennen des Befahrens des Banketts durch das Fahrzeug eine Zeitdauer des Befahrens des Banketts ermittelt wird, wobei bei einer Überschreitung eines vorgegebenen Schwellwerts durch die ermittelte Zeitdauer automatisch ein Verzögerungsvorgang, insbesondere ein Notbremsvorgang, des Fahrzeugs durchgeführt wird.

Beispielsweise kann nach der Klassifizierung beziehungsweise Zuordnung der Gefahrensituation zum ersten Gefahrenszenario oder zumindest zu dem zweiten Gefahrenszenario oder zu einem anderweitigen Gefahrenszenario durch die elektronische Auswerteeinheit entsprechende Signale generiert werden, mit welchen verschiedene Fahrzeugsysteme und/oder Fahrzeugkomponenten und/oder zumindest ein elektronisches Fahrassistenzsystem automatisch, dynamisch angepasst werden kann. Insbesondere erfolgt hierbei eine automatische Parametrierung und/oder Konfiguration der jeweiligen Systeme.

Beispielsweise können hierbei eine Fahrdynamikregelung ("electronic stability control" ESC) oder anderweitige elektronische Stabilitätsprogramme, wie Antiblockiersystem, Antriebsschlupfregelung, elektronische Bremskraftverteilung, Bremsassistenten oder elektronische Bremssysteme angepasst werden. Durch diese dynamische Anpassung kann erreicht werden, dass zum einen die Befahrung des Banketts durch das Fahrzeug sicher durchgeführt, überwacht und gesteuert werden kann. Insbesondere wird durch die dynamische Anpassung der elektronischen Fahrassistenzsysteme erreicht, dass das Fahrzeug wieder sicher aus dem Bankett manövriert, insbesondere automatisch manövriert, werden kann. Insbesondere kann der Fahrer für das Wiederverlassen des Banketts durch die angepassten elektronischen Fahrassistenzsysteme automatisch unterstützt beziehungsweise assistiert werden. Beispielsweise können hierzu Bankettfunktionen von Fahrerassistenzsystemen und/oder Pre-Crash-Funktionen verwendet werden.

Um die den Fahrer und die Passagiere des Fahrzeuges bei dem Befahren des Banketts besser schützen zu können, können weitere Sicherheitsmaßnahmen automatisch eingeleitet und durchgeführt werden. Dabei ist insbesondere die Stabilisierung des Fahrers und/oder der Passagiere von Bedeutung. Dies wird zum einen durch die automatische Gurtstraffung erreicht. Zusätzlich kann die Sitzposition der Passagiere des Fahrzeuges in den jeweiligen Fahrzeugsitz beispielsweise durch automatisches Anpassen von seitlichen Sitzelementen und/oder Kopfstützelementen des jeweiligen Fahrzeugsitzes durchgeführt werden. Beispielsweise können hier einstellbare Sitzelemente der jeweiligen Fahrzeugsitze so eingestellt werden, dass der jeweilige in dem Fahrzeugsitz befindliche Passagier in Fahrzeugquerrichtung des Fahrzeuges fest stabilisiert beziehungsweise positioniert ist. Somit kann der jeweilige Passagier im Fahrzeugsitz nicht mehr nach links oder rechts rutschen beziehungsweise bewegt werden. Somit ist zum einen der Passagier in Fahrzeuglängsrichtung durch den gestrafften Gurt und in Fahrzeugquerrichtung durch die jeweiligen eingestellten Sitzelemente des Fahrzeugsitzes stabilisiert.

Eine weitere Möglichkeit für eine zusätzliche Sicherheitsmaßnahme beziehungsweise einem Eingriff in das Fahrverhalten des Fahrzeuges ist der, dass durch die elektronische Auswerteeinheit, insbesondere durch einen Timer der elektronischen Auswerteeinheit, ermittelt wird, wie lange das Fahrzeug bereits in dem Bankett fährt. Dabei wird diese Zeitdauer bestimmt, und mit einem vorgegebenen zeitlichen Schwellwert verglichen. Sollte dieser vorgegebene Schwellwert überschritten werden, so kann beispielsweise durch ein elektronisches Fahrassistenzsystem, insbesondere dem elektronischen Fahrzeugführungssystem, automatisch ein Bremsvorgang beziehungsweise Verzögerungsvorgang des Fahrzeuges eingeleitet werden. Dies ist dann von Vorteil, wenn der Fahrer das Fahrzeug alleine nicht mehr sicher aus dem Bankett herausbewegen kann. Folglich wäre hier als letzte Möglichkeit das unverzügliche Bremsen des Fahrzeuges, sodass das Fahrzeug sicher zum Stillstand gebracht werden kann. Dabei kann insbesondere die jeweilige klassifizierte Gefahrensituation, insbesondere die Hürde dieser klassifizierten Gefahrensituation, hierbei berücksichtigt werden, dass bei einer hohen Gefahrensituation beziehungsweise einem hohen Gefahrenpotenzial unverzüglich ein Notbremsvorgang des Fahrzeuges eingeleitet und durchgeführt wird. Somit kann im Worst-Case-Fall das Fahrzeug unverzüglich und sicher zum Stillstand gebracht werden, sodass die Gefahr für das Fahrzeug, die Passagiere des Fahrzeugs und andere Verkehrsteilnehmer reduziert beziehungsweise minimiert werden kann.

In einem weiteren Ausführungsbeispiel der Erfindung ist vorgesehen, dass für das Beurteilen der Gefahrensituation des Befahrens des Banketts ein zur Fahrbahn und zum Bankett verschiedener Bereich in einer Umgebung des Banketts, welcher sich unmittelbar an das Bankett anschließt, berücksichtigt wird, insbesondere mit der Erfassungseinrichtung dieser Bereich zusätzlich erfasst wird. Mit anderen Worten ausgedrückt, wird das Bankett an einem an einer Seite durch die Fahrbahn und an der hier zur anderen Seite durch diesen verschiedenen Bereich begrenzt. Somit ist das Bankett nicht als vollständiger Bereich in der Umgebung der Fahrbahn anzusehen, sondern ausschließlich als ein vorgegebener, insbesondere schmaler, seitlicher Bereich der Fahrbahn. Beispielsweise kann jeweils seitlich zur Fahrbahn das Bankett vorhanden sein und anschließend an das Bankett ist wiederum ein zusätzlicher Bereich handeln. Beispielsweise handelt es sich bei dem zusätzlichen Bereich um einen Feldweg, eine Wiese, eine Feldstraße, einen Fußgängerweg, einen Radweg oder einen nicht befestigten Boden. Insbesondere ist der verschiedene Bereich daher von Bedeutung, da beispielsweise die Breite beziehungsweise und/oder Länge des Banketts bei einem Bremsvorgang oder einem Manövriervorgang beim Befahren des Banketts nicht ausweichen kann und dieser zusätzliche Bereich miteinberechnet werden kann, um einen Bremsweg bei einem Bremsvorgang vorhersagen zu können. Der Bereich kann ebenso mit der Erfassungseinrichtung kontinuierlich erfasst werden. Beispielsweise kann es sein, dass das Bankett eine Bankettbreite aufweist, welche kleiner als die Fahrzeugbreite des Fahrzeuges ist, sodass für ein sicheres Befahren des Banketts durch das Fahrzeug und für die anschließenden Sicherheitsmaßnahmen beziehungsweise Gegenmaßnahmen zusätzlich der verschiedene an das Bankett anschließende Bereich berücksichtigt werden muss, um insbesondere das Fahrzeug sicher aus dem Bankett befahren zu können oder bremsen zu können.

In einem weiteren Ausführungsbeispiel der Erfindung ist vorgesehen, dass die Straffung des zumindest einen Sicherheitsgurts des Rückhaltesystems des Fahrzeugs in Abhängigkeit von der beurteilten Gefahrensituation kaskadiert durchgeführt wird. Insbesondere wird ein Straffungszustand des zumindest einen Sicherheitsgurts in Abhängigkeit von der Gefahrensituation und/oder einer Änderung der Gefahrensituation angepasst. Insbesondere wird beim Erkennen des Befahrens des Banketts ein erster Straffungszustand des zumindest einen Sicherheitsgurts eingestellt und in Abhängigkeit von der Gefahrensituation und/oder der Änderung der Gefahrensituation ein zum ersten Straffungszustand strafferer zweiter Straffungszustand des zumindest einen Sicherheitsgurtes eingestellt wird.

Um auf die jeweilige aktuelle Gefahrensituation der Bankettfahrt besser eingehen und reagieren zu können, kann die klassifizierte Gefahrensituation dahingehend durch die elektronische Auswerteeinheit beurteilt werden, inwieweit die Straffung des Sicherheitsgurtes durchgeführt werden sollte. Dabei kann die Gurtstraffung des Sicherheitsgurtes kaskadiert beziehungsweise stufenmäßig durchgeführt werden. Beispielsweise kann zunächst bei dem Erkennen der Bankettfahrt eine erste Stufe des automatischen Gurtstraffens durchgeführt werden und je nach aktueller beziehungsweise zukünftiger Einschätzung beziehungsweise Bewertung der Gefahrensituation der Bankettfahrt können nachfolgende Stufen von zusätzlichen Gurtstraffungsvorgängen durchgeführt werden. Somit kann beispielsweise bei der ersten Erkenntnis der Bankettfahrt zunächst eine erste Sicherung des Gurtes erfolgen und sollte die Bankettfahrt unverzüglich beendet werden, so können weitere Stufen der Gurtstraffung vermieden werden. Somit kann beispielsweise verhindert werden, dass ein Passagier des Fahrzeuges nicht einer unnötigen strengen Gurtstraffung ausgesetzt ist, obwohl es die aktuelle Gefahrensituation noch nicht nötig hat. Somit kann die Gurtstraffung dynamisch und auf intelligente Weise in verschiedenen Stufen beziehungsweise Level durchgeführt werden.

Insbesondere kann mit Hilfe der elektronischen Auswerteeinheit insbesondere das Rückhaltesystem des Fahrzeuges derart angesteuert beziehungsweise adaptiert oder parametriert werden, dass der aktuelle Straffungszustand des Sicherheitsgurtes automatisch in Abhängigkeit von der aktuellen und/oder zukünftigen Gefahrensituation angepasst wird. Somit kann bei Feststellung durch die elektronische Auswerteeinheit eines höheren Gefahrenpotenzials eine zusätzliche Straffung des Gurtes durchgeführt werden. Insbesondere kann bei einer plötzlichen Änderung der Gefahrensituation der Straffungszustand des Sicherheitsgurtes automatisch angepasst, insbesondere erhöht, werden. Somit können auf die jeweilige aktuelle Situation und der Gegebenheiten besser reagiert werden, sodass der Schutz der Passagiere im Fahrzeug erhöht werden kann. Beispielsweise kann ab dem Erkennen der Bankettfahrt zunächst ein erster Straffungszustand des Sicherheitsgurtes eingestellt, insbesondere automatisch eingestellt, werden. Sollte nun aufgrund einer sich geänderten Gefahrensituation der Bankettfahrt und/oder einer dynamischen Änderung des aktuellen Geschehens die Gefahrensituation höher priorisiert worden sein, so kann der Sicherheitsgurt von dem ersten Straffungszustand in den zweiten und/oder in einen höheren Straffungszustand eingestellt werden. Insbesondere erfolgt dabei der Straffungszustand des Sicherheitsgurtes in den zweiten Straffungszustand straffer als in dem ersten Straffungszustand. Dies ist insbesondere bei der Feststellung beziehungsweise Vorhersage einer höheren Gefahrensituation vorteilhafter. Beispielsweise kann hierzu eine die Zeitdauer, ab dem Eintreten des Fahrzeugs in das Bankett berücksichtigt werden. Sollte hierzu ebenfalls ein vorgegebener zeitlicher Schwellwert des Befahrens des Banketts überschritten worden sein, so kann davon ausgegangen werden, dass die Gefahr einer unkontrollierten Kollision und/oder eines Unfalls hoch ist, sodass beispielsweise unverzüglich automatisch ein zum ersten Straffungszustand strafferer zweiter Straffungszustand des Sicherheitsgurtes automatisch eingestellt wird. Folglich kann die Sicherheit der Passagiere im Fahrzeug erhöht werden.

In einem weiteren Ausführungsbeispiel ist vorgesehen, dass zumindest eine Information bezüglich des erkannten Befahrens des Banketts in einer digitalen Karte gespeichert wird, wobei diese Information bei einer zukünftigen Beurteilung einer Gefahrensituation eines Befahrens eines Banketts, insbesondere einer Bankettfahrt, durch ein Fahrzeug berücksichtigt wird. Insbesondere wird die elektronische Auswerteeinheit für das Beurteilen der Gefahrensituation mit einem Maschinenlernalgorithmus in Abhängigkeit von der digitalen Karte und/oder weiteren Informationen bezüglich eines Befahrens eines Banketts maschinell trainiert. Folglich kann die elektronische Auswerteeinheit des Fahrzeuges und/oder von anderen Fahrzeugen und/oder von einem Flottenserver und oder von einem anderweitigen cloudbasiertem System für das Beurteilen und Erkennen von Bankettfahrten automatisiert, maschinell trainiert werden. Somit können zukünftige Situationen bezüglich einer Bankettfahrt besser beurteilt und verbesserte Sicherheitsmaßnahmen zum Schutz der Passagiere und anderen Verkehrsteilnehmern durchgeführt werden.

Beispielsweise kann in der digitalen Karte, welche beispielsweise in einer Recheneinheit und/oder der elektronischen Auswerteeinheit hinterlegt ist, die das jeweilige Bankett und die jeweilige Gefahr ausgehend von diesem Bankett hinterlegt werden. Somit ist in der digitalen Karte beispielsweise zu jedem Bankett spezielle Informationen bezüglich der potentiellen Gefahren dieses Banketts hinterlegt. Somit kann beispielsweise bei zukünftigen potentiellen Bankettfahrten frühzeitig erkannt werden, dass ein Befahren dieses speziellen Banketts besonders gefährlich oder weniger gefährlich ist. Somit können verbesserte und effizientere Sicherheitsmaßnahmen durchgeführt beziehungsweise eingeleitet werden.

Für das maschinelle Trainieren kann beispielsweise die elektronische Auswerteeinheit eine Maschinenlerneinheit beinhalten. Mittels dieser können über Maschinenlernsysteme und/oder Maschinenlernalgorithmen das Beurteilen und/oder Erkennen einer Bankettfahrt maschinell trainiert werden. Hierzu können die verschiedensten Informationen verwendet werden. Dabei sind insbesondere Informationen wie Lage des Banketts, Länge des Banketts, Breite des Banketts, Art des Banketts, die Umgebungsinformationen zum Bankett entscheidend. Ebenfalls können die bereits festgestellten und erkannten und durchgeführten Bankettfahrten zusätzlich berücksichtigt werden. Dabei können Informationen wie der Grund der Bankettfahrt, die Dauer der Bankettfahrt, der Ausgang der Bankettfahrt, welche Gegenmaßnahmen beziehungsweise Sicherheitsmaßnahmen getroffen wurden, der jeweilige Fahrzeugtyp, die verwendeten Sicherheitsmaßnahmen und/oder Fahrassistenzsysteme zum Beenden der Bankettfahrt oder die vielfältigsten Informationen hinsichtlich einer Bankettfahrt berücksichtigt werden. Aus dieser Vielzahl an möglichen Informationen können zukünftige Bankettfahrten frühzeitig erkannt, beurteilt und sicherer gestaltet werden.

Beispielsweise kann eine digitale Karte mit Gefahrensituationen bezüglich der Bankettfahrten generiert beziehungsweise aufgebaut werden, in der es zu unkritischen und kritischen Bankettfahrten kommt. Bei unkritischen Bankettfahrten, insbesondere an unkritischen Banketten, können Schwellwerte für den Eingriff bei den üblichen Geschwindigkeiten erhöht werden. Gegebenenfalls können auch Banketteingriffe ganz ausgeblendet werden. Bei kritischen Bankettfahrten könnte eine Situationsanalyse erfolgen, was zur kritischen Bankettfahrt geführt hat und hierbei könnten ähnliche Situationen gefiltert und entsprechende Schwellwerte für einen Eingriff angepasst werden.

Durch Umfeldwahrnehmung von beispielsweise anderen Verkehrsteilnehmern könnten in dem Lernalgorithmus der Maschinenlerneinheit die Ursache für das Verlassen der Fahrbahn erkannt werden. Beispielsweise kann dies durch vorbeifahrendem Gegenverkehr, stehende Fahrzeuge oder anderweitigen Verkehrsbeobachtern erfolgen. Erfolgt das Ausweichen in das Bankett in angemessener Weise, insbesondere bei beherrschbarer Geschwindigkeit, oder an bekannter Stelle anhand der digitalen Karten, kann die Bankettreaktion unterdrückt werden oder bei höheren Schwellwerten erst gestartet werden.

Sinnvoll ist hier auch die Kombination mit Straßenreibwerten. Weicht der von dem Fahrzeug erkannte Reibwert im Bankett deutlich nach unten von den Reibwerten der Straße ab, könnten die Banketteingriffe frühzeitig durchgeführt werden. Insbesondere kann dies durch Cloudanwendungen oder durch Fahrzeugschätzungen vor dem Verlassen der Straße durchgeführt werden.

Weiterhin kann bei einer unebenen Fahrbahn auf Basis von den digitalen Kartendaten die Schwelle für das Erkennen eines Banketts aufgrund der Vertikalbeschleunigung nach oben gesetzt werden. Dies dient zur Vermeidung von Fehlauslösungen der Sicherheitsmaßnahmen aufgrund von unebener Fahrbahn, wie beispielsweise bei einem Kopfsteinpflaster. Dies kann insbesondere mit Hilfe der Maschinenlerneinheit trainiert werden.

Beispielsweise handelt es sich bei dem soeben geschilderten Verfahren um ein computerimplementiertes oder cloudbasiertes Verfahren. Beispielsweise kann für das Durchführen eines solchen Verfahrens ein entsprechendes Computerprogramm verwendet werden. Beispielsweise kann die elektronische Auswerteeinheit Recheneinheiten und/oder Prozessoren aufweisen, mit welchen ein solches Verfahren beispielsweise durchgeführt werden kann.

Ein weiterer Aspekt der Erfindung betrifft ein elektronisches Fahrzeugführungssystem mit einer Erfassungseinheit und einer elektronischen Auswerteeinheit, wobei das elektronische Fahrzeugführungssystem zum Durchführen eines Verfahrens nach einem Ausführungsbeispiel des vorhergehenden Aspekts oder des Aspekts ausgebildet ist. Insbesondere wird das vorhin geschilderte Verfahren oder eine vorteilhafte Ausführungsform des Verfahrens mit dem soeben geschilderten Fahrzeugführungssystem durchgeführt.

Beispielsweise kann es sich bei dem elektronischen Fahrzeugführungssystem um ein elektronisches System und oder eine elektronische Einheit handeln. Insbesondere handelt es sich bei dem elektronischen Fahrzeugführungssystem um ein Fahrassistenzsystem.

Beispielsweise kann das elektronische Fahrzeugführungssystem in einem Fahrzeug integriert sein. Ebenso kann es als cloudbasierte Lösung extern zum Fahrzeug vorhanden sein, und die entsprechenden Informationen, Daten und Signale können über Kommunikationswege ausgetauscht und übertragen werden.

Ein weiterer Aspekt der Erfindung betrifft ein Fahrzeug mit einem weiteren elektronischen Fahrzeugführungssystem nach dem vorherigen Aspekt oder einer Weiterbildung daraus.

Beispielsweise handelt es sich bei dem Fahrzeug um ein Kraftfahrzeug, wie ein Personenkraftwagen oder um einen Lastkraftwagen oder um ein anderweitiges Fahrzeug. Beispielsweise kann es sich bei dem Fahrzeug um ein hochautomatisiertes Fahrzeug handeln. Dieses kann beispielsweise als vollautonom betriebenes oder teilautonom betriebenes Fahrzeug ausgebildet sein.

Vorteilhafte Ausführungen eines Aspekts sind als vorteilhafte Ausführungen eines anderen Aspekts und umgekehrt anzusehen.

Zu der Erfindung gehören auch Weiterbildungen des erfindungsgemäßen elektronischen Fahrzeugführungssystems und des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen elektronischen Fahrzeugführungssystems und des erfindungsgemäßen Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung eines Fahrzeugs mit einem elektronischen Fahrzeugführungssystem;
- Fig. 2: ein Ausführungsbeispiel einer möglichen Sicherheitsmaßnahme beim Befahren eines Banketts mit dem Fahrzeug aus Fig.1;
- Fig. 3: ein weiteres Ausführungsbeispiel einer möglichen Sicherheitsmaßnahme beim Befahren eines Banketts mit dem Fahrzeug aus Fig.1; und
- Fig. 4: ein weiteres Ausführungsbeispiel einer möglichen Sicherheitsmaßnahme beim Befahren eines Banketts mit dem Fahrzeug aus Fig.1.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

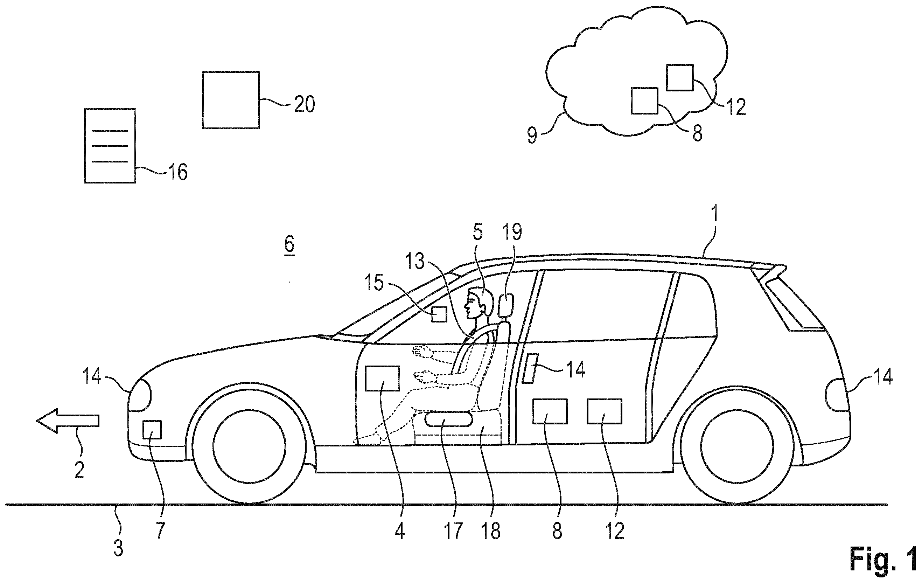

Die Fig. 1 zeigt beispielsweise eine schematische Darstellung eines Fahrzeugs 1, welches eine Fortbewegungsfahrt 2 entlang einer Fahrbahn 3 durchführt.

Beispielsweise handelt es sich bei dem Fahrzeug 1 um ein hochautomatisiertes Fahrzeug, insbesondere um ein vollautonom oder teilautonom betriebenes Fahrzeug. Insbesondere handelt es sich bei dem Fahrzeug 1 um ein Kraftfahrzeug. Das Fahrzeug 1 kann eine reale Fortbewegungsfahrt 2 entlang der Fahrbahn 3 im Straßenverkehr durchführen. Bei der Fahrbahn 3 kann es sich beispielsweise um eine Landstraße oder um eine Autobahn oder um eine mehrspurige Bundesstraße handeln. Insbesondere kann es sich bei der Fahrbahn 3 um eine Fahrbahn einer beliebigen Straße handeln.

Beispielsweise kann das Fahrzeug 1 ein elektronisches Fahrzeugführungssystem 4 aufweisen. Mit Hilfe des elektronischen Fahrzeugführungssystems 4 kann insbesondere ein Fahrer 5 des Fahrzeugs 1 beim Führen des Fahrzeugs 1 unterstützt, insbesondere assistiert, werden. Folglich kann es sich bei dem elektronischen Fahrzeugführungssystem 4 um ein oder mehrere elektronische Fahrassistenzsysteme handeln. Ebenso denkbar ist, dass das elektronische Fahrzeugführungssystem 4 direkt im Fahrzeug 1, insbesondere im elektronischen Bordnetz, integriert ist oder das elektronische Fahrzeugführungssystem 4 als cloudbasiertes System extern zum Fahrzeug 1 konzipiert ist und die entsprechenden Anwendungen über drahtlose Kommunikationsverbindungen zwischen diesem System und dem Fahrzeug 1 ausgetauscht beziehungsweise übertragen werden.

Um eine automatisches, automatisiertes Assistieren des Fahrers 5 des Fahrzeug 1 Bereitstellen zu können, ist es von Vorteil, wenn ein Umgebungsbereich in einer Umgebung 6 des Fahrzeugs 1 kontinuierlich mit zumindest einem einer Erfassungseinrichtung 7 des Fahrzeugs 1 erfasst beziehungsweise überwacht wird. Bei der Erfassungseinrichtung 7 kann es sich beispielsweise um Sensoren, Kameras oder Erfassungssysteme handeln.

Um insbesondere das elektronische Fahrzeugführungssystem 4 mit entsprechenden Signalen, insbesondere Anweisungen, für ein Eingreifen in das Fahrverhalten des Fahrzeugs 1 ermöglichen zu können, ist eine elektronische Auswerteeinheit 8 vorgesehen. Die elektronische Auswerteeinheit 8 kann insbesondere als Auswertesystem bestehend aus mehreren einzelnen Recheneinheiten und/oder Prozessoreinheiten ausgebildet sein. Die elektronische Auswerteeinheit 8 kann entweder im Fahrzeug 1 integriert sein oder als cloudbasierte Anwendung extern zur Verfügung gestellt werden. Dabei kann in diesem Fall die elektronische Auswerteeinheit 8 in einem cloudbasierten System 9 verwendet werden. Über jeweilige Kommunikationsverbindungen können entsprechende Signale und/oder Informationen der elektronischen Auswerteeinheit 8 an das Fahrzeug 1 übermittelt werden. Ebenso ist es möglich, dass die elektronische Auswerteeinheit 8 direkt im Fahrzeug 1 in dem elektronischen Fahrzeugführungssystem 4 integriert ist.

Bei dem cloudbasierten System 9 kann es sich beispielsweise um eine Datenwolke und/oder um ein Serversystem handeln.

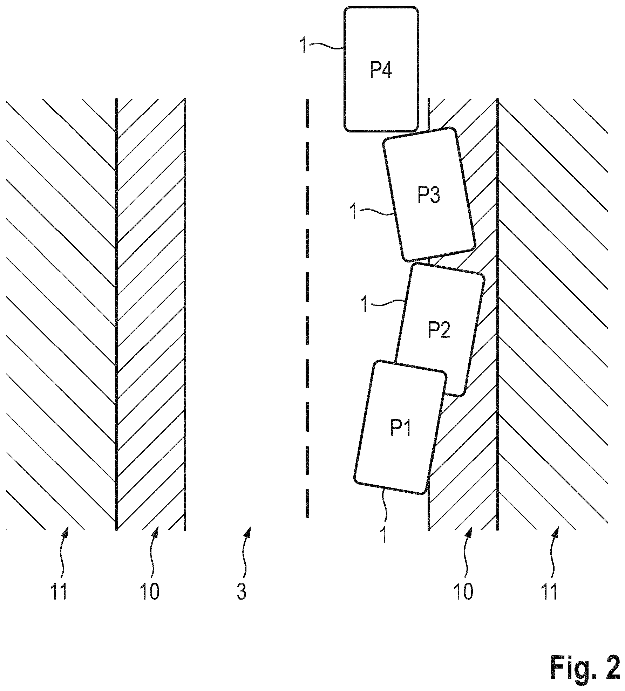

Beispielsweise kann das elektronische Fahrzeugführungssystem 4 dem Fahrer 5 des Fahrzeugs 1 bei einer möglichen Bankettfahrt unterstützen. Bei Bankettfahrten kommt das Fahrzeug 1 von der aktuell befahrenen Straße, also der Fahrbahn 3, ab. Dies ist vor allem dadurch problematisch, da die Bereiche neben der Straße meist einen geringeren Reibwert aufweisen. Hierzu kann über entsprechende Bankettfunktionen, wie beispielsweise elektronisches Stabilisierungssystem, der Fahrer 5 dahingehend unterstützt werden, dass ein sicheres Rücklenken des Fahrzeugs 1 auf die Straße hergestellt werden kann. Dies kann beispielsweise durch das elektronische Fahrzeugführungssystem 4 erfolgen. Ohne solch eine Unterstützung drehen viele Fahrer zu stark an der Lenkung ohne dass eine ausreichende Querbeschleunigung aufgebaut wird. Dies hat die Ursache durch der geringen Reibwerte neben der Straße. Sollte dabei das Fahrzeug 1 in diesem Falle auf die Fahrbahn 3 wieder zurückkommen und wieder auf einer Oberfläche mit höherem Reibwert fahren, kann sich die Querdynamik des Fahrzeugs 1 plötzlich drastisch erhöhen, was oft zu Gegenverkehrsunfällen oder Unfällen am Fahrbahnrand der Gegenseite führen kann. Um dies verhindern zu können, kommt das vorgeschlagene Verfahren und insbesondere das elektronische Fahrzeugführungssystem 4 besonders zur Geltung. Dadurch kann ein automatisches Durchführen von Sicherheitsmaßnahmen bei einem Befahren eines zu der Fahrbahn 3 verschiedenen Banketts 10 (vergleiche Figur 2) mit dem Fahrzeug 1. Das Bankett 10 ist insbesondere ein vorgegebener, insbesondere schmaler, Bereich seitlich neben der Fahrbahn 3.

In den nachfolgenden Figuren werden verschiedene Gefahrensituationen einer Bankettfahrt und insbesondere die hierfür durchzuführenden Sicherheitsmaßnahmen erläutert.

Die Fig. 2 zeigt eine mögliche situationsbezogene Gefahrensituation einer Bankettfahrt. Zunächst ist hier zu erkennen, dass Bankett 10 unmittelbar an den Seiten an den Randbereichen beziehungsweise Seiten der Fahrbahn 3 angeordnet sind. Insbesondere ist zwischen der Fahrbahn 3 und dem Parkett 10 ein fließender Übergang vorhanden. Insbesondere verläuft das Bankett 10 angrenzend angeordnet, insbesondere parallel verlaufend, zur Fahrbahn 3. Unmittelbar an den von der Fahrbahn 3 abgewandten Seiten des Banketts 10 befindet sich jeweils ein zum Bankett 10 verschiedener Bereich 11. Somit wird das Bankett 10 zum einen durch die Fahrbahn 3 und zum anderen durch den Bereich 11 eingegrenzt. Beispielsweise handelt es sich bei dem Bereich 11 um eine unbefestigte Straße oder um einen unbefestigten Boden oder um einen Feldweg oder um einen Fahrradweg oder um einen Fußgängerweg.

Beispielsweise kann das Fahrzeug 1 über ein Spurhaltesystem, insbesondere ein Lane-Assist-System, im Normalfall ein Verlassen der Fahrspur 3 verhindert werden. Dies trifft jedoch nicht immer zu, da durch Systemausfälle oder unvorhersehbaren Verkehrssituationen das Verlassen der Fahrspur 3 nicht verhindert werden kann. Beispielsweise kann ein aktuelles Lenkmoment des Spurhalteassistenten nicht ausreichend genug sein, um ein Abkommen von der Fahrbahn 3 zu verhindern, weil beispielsweise der Fahrer 5 dieses teilweise überlenken kann oder weil in dynamischen Situationen von Kurven eine ausreichende Kurvenführung nicht mehr gegeben werden kann.

Folglich ist es von Bedeutung, dass eine abgestimmte Fahrreaktion bei einer Bankettfahrt bereitgestellt werden kann. Dies kann beispielsweise durch das elektronische Fahrzeugführungssystem 4 erfolgen. Zusätzlich oder anstatt kann das elektronische Fahrzeugführungssystem 4 beispielsweise eine Pre-Crash-Funktion aufweisen, welche bei Unfällen einen Fahrer sichern kann. Pre-Crash-Maßnahmen sind zusätzliche Vorbereitungen von Fahrzeugen und Fahrzeuginsassen, falls eine Situation in einem Unfall endet.

Zunächst kann mittels der Erfassungseinrichtung 7 das Bankett 10 in der Umgebung 6 des Fahrzeugs 1 erfasst, insbesondere kontinuierlich, werden. Diese Information kann beispielsweise der elektronischen Auswerteeinheit 8 zur Verfügung gestellt werden. Zusätzlich können Informationen bezüglich einer Position und/oder einer Art des Banketts 10 dem Fahrzeug 1 und/oder der elektronischen Auswerteeinheit 8 bereitgestellt, insbesondere übermittelt, werden. Anhand dieser Informationen kann beispielsweise die elektronische Auswerteeinheit 8 feststellen beziehungsweise erkennen, ob eine Bankettfahrt, also das Fahrzeug 1 in dem Bankett 10 fährt, vorliegt. Zusätzlich oder anstatt dazu können weitere Informationen und/oder Daten für die Feststellung beziehungsweise Erkennung des Befahrens des Banketts 10 durch das Fahrzeug 1 verwendet werden. Hierzu können zum einen Umgebungsinformationen der Umgebung 6 verwendet werden. Hierzu können Informationen bezüglich Gegenstände, wie Bäume, Leitplanken, Laternenpfosten, andere Verkehrsteilnehmer, oder anderweitige Umgebungsinformationen berücksichtigt werden. Von großer Bedeutung ist insbesondere die Information bezüglich des Banketts 10. Hierzu ist besonders die Oberflächenbeschaffenheit, die Dimensionen des Banketts 10, eine Breite des Banketts 10, eine Steigung oder Gefälle des Banketts 10 oder der zum Parkett verschiedene Bereich 11 von Bedeutung.

Ebenfalls kann eine Position des Fahrzeugs 1 mittels einer Positionsbestimmungseinheit 12 (vergleiche Fig. 1) durchgeführt werden. Die Positionsbestimmungseinheit 12 kann entweder in Fahrzeug 1 integriert sein oder Bestandteil des cloudbasierten Systems 9. Anhand dieser kann zum einen die Position des Fahrzeuges 1 ermittelt werden, beispielsweise über GPS, und mit der Position, insbesondere geographischen Position, des Banketts 10. Somit kann ein Abgleich, beziehungsweise Vergleich zwischen der aktuellen Position des Fahrzeugs 1 mit dem Bankett 10 durchgeführt werden, sodass hieraus festgestellt werden kann, ob sich das Fahrzeug 1 vollständig oder teilweise in dem Bankett 10 befindet. Insbesondere ist es dann von Bedeutung, wenn das Fahrzeug 1 mit zumindest einem Reifen bereits auf dem Bankett 10 sich befindet. Je mehr Reifen des Fahrzeugs 1 auf dem Bankett 10 liegen, desto größer ist die Gefahr der Bankettfahrt.

Mit Hilfe der elektronischen Auswerteeinheit 8 kann anhand der Umgebungsinformationen und/oder der Positionsinformationen und/oder der anderweitig bereits vielfältig genannten Informationen festgestellt beziehungsweise ermittelt werden, ob die Bankettfahrt aktuell vorliegt. Eine weitere Möglichkeit um auf eine Bankettfahrt schließen zu können, ist der Vergleich von Reibwerten beziehungsweise Reibungskoeffizienten des Untergrundes auf welchem das Fahrzeug 1 aktuell fährt. Insbesondere weist das Bankett 10 im Vergleich zu der Fahrbahn 3 ein dazu verschiedenes Material auf. Insbesondere handelt es sich bei der Fahrbahn 3 um eine Oberfläche mit Beton oder Asphalt oder einer gepflasterten Oberfläche. Das Bankett 10 ist meist ein mit Kies bedeckter oder erdbedeckter Bereich, sodass die Reibungswerte des Banketts im Vergleich zu der Fahrbahn 3 um ein vielfaches schlechter beziehungsweise geringer sind. Anhand eines solchen Vergleichs der Reibungswerte kann ebenfalls darauf geschlossen werden, ob zumindest ein Reifen des Fahrzeugs 1 auf dem Bankett 10 sich befindet. Dies erfolgt insbesondere mit Hilfe der elektronischen Auswerteeinheit 8.

In der Fig. 2 ist nun mit der Position P1 dargestellt, bei welcher sich das Fahrzeug 1 in Richtung des Banketts 10 bewegt und folglich die Fahrbahn 3 zumindest teilweise verlässt. Dieses Verlassen der Fahrbahn 3 kann mittels der elektronischen Auswerteeinheit 8 ermittelt werden. Sobald dies vorliegt, kann mittels der elektronischen Auswerteeinheit 8 beurteilt beziehungsweise bewertet werden, inwieweit eine Gefahrensituation der Bankettfahrt vorliegt. Bei einer Gefahrensituation ist zu verstehen, welche gezielt beziehungsweise explizit durch das Befahren des Banketts 10 des Fahrzeugs 1 einhergeht und/oder zukünftig einhergehen kann. Folglich kann mithilfe der elektronischen Auswerteeinheit 8 nicht nur das aktuell vorliegende Befahren des Banketts 10 ermittelt und beurteilt werden, sondern es kann anhand der verschiedensten Informationen eine Vorhersage treffen, inwieweit die Bankettfahrt noch weiter gefährlich werden kann. In Abhängigkeit von der beurteilten Gefahrensituation können automatisch Sicherheitsmaßnahmen eingeleitet, insbesondere durchgeführt werden. Dies kann beispielsweise bei der Position P2 in der Fig. 2 des Fahrzeugs 1 erfolgen. Dabei kann hier beispielsweise eine automatische Straffung zumindest eines Sicherheitsgurts 13 eines Rückhaltesystems 14 des Fahrzeugs 1 durchgeführt werden. Mit anderen Worten wird beispielsweise der Fahrergurt des Fahrers 5 gestrafft. Insbesondere können alle Insassen des Fahrzeugs 1 über ihre den jeweiligen Sicherheitsgurt beziehungsweise Rückhaltegurt durch eine Straffung des jeweiligen Gurtes in den jeweiligen Sitz stabilisiert werden. Beispielsweise kann hierbei der Fahrer 5 und die Insassen des Fahrzeugs 1 durch eine moderate Gurtstraffung automatisch gesichert werden. Dabei ergibt sich zum einen der Vorteil, dass bei einem möglichen Unfall zum einen die Insassen geschützt beziehungsweise gesichert sind, insbesondere falls es zu Unebenheiten kommt. Und zum anderen erfolgt durch die Straffung des jeweiligen Gurtes eine Erhöhung der Aufmerksamkeit der Insassen, insbesondere des Fahrers 5. Somit kann beispielsweise der Fahrer 5 auf die aktuelle gefährliche Gefahrensituation hinsichtlich des Banketts 10 aufmerksam gemacht werden.

Zusätzlich zu der Durchführung der Sicherheitsmaßnahmen, insbesondere des Gurtstraffens, kann beispielsweise eine aktive Geschwindigkeitsregelungseinrichtung, insbesondere eine ACC-Regelfunktion, des Fahrzeuges 1 deaktiviert werden, da eine automatische Geschwindigkeitsanpassung auf dem unbekannten Terrain des Banketts 10 nicht mehr sicher durchzuführen ist. Ebenfalls kann hier eine vorsichtige Verzögerung beziehungsweise Bremsung als Sicherheitsfunktion durchgeführt werden.

Eine Notfunktionalität sollte jedoch gegeben sein, da es beispielsweise beabsichtigt sein kann, dass der Fahrer 5 absichtlich aufgrund von unvorhersehbaren Verkehrssituationen und/oder anderweitigen Gegebenheiten in das Bankett 10 fährt. Da sollte es jederzeit möglich sein, dass der Fahrer 5 systemseitige Eingriffe übersteuern kann.

Als zusätzliche Sicherheitsmaßnahme kann beispielsweise in Abhängigkeit von der Gefahrensituation Verkehrsteilnehmer in der Umgebung 6 des Fahrzeugs 1 vor der Gefahrensituation bezüglich der Bankettfahrt des Fahrzeugs 1 gewarnt werden. Hierzu kann beispielsweise automatisch durch eine Beleuchtungseinrichtung 14 des Fahrzeugs 1 die Verkehrsteilnehmer durch optische Warnhinweise gewarnt werden. Bei der Beleuchtungseinrichtung 14 kann es sich um eine Warnblinkanlage des Fahrzeugs 1 handeln, sodass durch Aufleuchten der Warnblinker die Verkehrsteilnehmer der Umgebung 6 gewarnt werden können und somit aufmerksam auf die aktuell vorherrschende Gefahrensituation informiert werden können. Ebenso können durch akustische Warnsignale, welche durch Lautsprechersysteme des Fahrzeugs 1 ausgegeben werden können, die anderen Verkehrsteilnehmer parallel gewarnt werden. Des Weiteren können ebenfalls bei der Feststellung der Bankettfahrt die Insassen des Fahrzeugs 1 akustisch und/oder optisch und/oder haptisch gewarnt werden. Hierzu können entsprechende Warnhinweise im Fahrzeug 1, insbesondere im Fahrgastinnenraum, ausgegeben werden. Dies kann beispielsweise über eine Ausgabeeinheit 15 erfolgen. Bei der Ausgabeeinheit 15 kann es sich beispielsweise um ein Infotainmentsystem oder um einen Bildschirm oder um ein Lautsprechersystem des Fahrzeugs 1 handeln. Ebenfalls könnte es sich bei der Ausgabeeinheit 15 um ein mobiles Endgerät, wie beispielsweise ein Smartphone oder ein Tablet oder eine Smartwatch, des Fahrers 5, oder eines der Insassen des Fahrzeugs 1 handeln.

Des Weiteren werden die Insassen des Fahrzeugs 1 über die Haptikstraffung, also mittels reversibler Gurtstraffung vor der aktuellen Gefahrensituation gewarnt. Beispielsweise ist in der Position P3 des Fahrzeugs 1 eine Reaktion des Fahrers 5 durchgeführt worden. Hierbei lenkt der Fahrer 5 das Fahrzeug 1 in Richtung der Fahrbahn 3 um, um das Bankett 10 wieder zu verlassen. Dieses Lenken des Fahrers 5 kann unter Umständen gefährlich sein. Beispielsweise kann es sich hierbei um eine plötzliche Überforderung des Fahrers 5 handeln, sodass dieser unkontrollierte Handlungen, beispielsweise sehr starkes Lenken, ausführt. In diesem Fall könnte zusätzlich noch ein Bremsvorgang eingeleitet werden. Insbesondere geschieht dies nach der Gurtstraffung, da der Fahrer 5 nun aufmerksam gemacht wurde. Dies kann insbesondere in einer kurzen Zeitspanne nach der Gurtstraffung erfolgen, da bei einer längeren Zeitdauer der Fahrer 5 wahrscheinlich mehr Zeit hat, um eine entsprechende Gegenmaßnahme sich zu überlegen. Dies kann durch ein Fahrerbeobachtungssystem des Fahrzeugs 1 überwacht werden. Beispielsweise könnte kurz nach der Gurtstraffug ein geringerer zeitlicher Schwellwert für die Erkennung einer panischen Reaktion des Fahrers 5 vorgegeben werden, um beispielsweise ESC-Stabilisierungseingriffe freizugeben. Beispielsweise kann mittels einer ESC-Bremsung das kurvenäußere Vorderrad des Fahrzeugs 1 gebremst werden. Ebenfalls können Lenkwinkelrücknahmen durch "steer-by-wire" erfolgen.

Damit man die soeben geschilderten Probleme besser beurteilen kann, kann für die Beurteilung der Gefahrensituation der Bankettfahrt eine Klassifizierungs-Datenbank 16 angewendet beziehungsweise berücksichtigt werden. Bei der Klassifizierungs-Datenbank 16 kann es sich beispielsweise um eine eigene externe Datenwolke oder um einen externen Datenserver handeln, in welchem die umfangreichsten Informationen bezüglich der Gefahrensituationen, der Vorgehensweisen, der Geschehnissen, der Unfallursachen, der Unfallergebnisse von Bankettfahrten hinterlegt sind. Anhand dieser vielfältigsten Informationen der Klassifizierungs-Datenbank 16 kann beispielsweise die elektronische Auswerteeinheit 8 die aktuelle Gefahrensituation der vorliegenden oder zukünftigen Bankettfahrt besser beurteilen. Dabei kann insbesondere eine Gefahrenstufe und/oder ein Gefahrenlevel der aktuellen Bankettfahrt besser eingeschätzt beziehungsweise bewertet werden. Dabei kann beispielsweise die aktuelle Gefahrensituation klassifiziert werden, sodass die Gefahrensituation der Bankettfahrt in ein erstes Gefahrenszenario gemäß einer ersten Klasse oder zumindest einem zweiten Gefahrenszenario gemäß einer zweiten Klasse zugeordnet werden kann. Somit erfolgt eine Einstufung der aktuellen Gefahrensituation, sodass insbesondere bei einem hohen Gefahrenpotenzial stärkere Sicherheitsmaßnahmen eingeleitet und durchgeführt werden können. Insbesondere können durch die vorgegebenen Gefahrensituationen der Datenbank die aktuelle Gefahrensituation schneller und effizienter eingestuft werden. In Abhängigkeit von der jeweils durchgeführten klassifizierten Gefahrensituation kann zumindest ein elektronisches Fahrerassistenzsystem, insbesondere das elektronische Fahrzeugführungssystem 4, dynamisch angepasst beziehungsweise parametriert werden. In dem Ausführungsbeispiel in der Fig. 2 könnte dies beispielsweise das dynamische Anpassen eines elektronischen Stabilitätsprogramms ("ESC") sein. Mit Hilfe dieses Systems kann trotz des starken Gegenlenkens des Fahrers 5 eine sichere Rückführung des Fahrzeugs 1 auf die Fahrbahn 3 erreicht werden. Zusätzlich kann hierzu in Abhängigkeit der klassifizierten Gefahrensituation eine kaskadierte Gurtstraffung erfolgen. Neben der bereits getätigten Gurtstraffung, also einer ersten Gurtstraffung, kann zusätzlich eine weitere, insbesondere Teilstraffung des Sicherheitsgurtes 13 durchgeführt werden. Dabei kann insbesondere in Abhängigkeit von der beurteilten beziehungsweise klassifizierten Gefahrensituation automatisch ein Straffungszustand des Sicherheitsgurtes 13 angepasst werden. Insbesondere kann in Abhängigkeit des bereits durchgeführten ersten Straffungszustands bei der ersten Gurtstraffung ein hierzu strafferer beziehungsweise stärkerer Straffungszustand automatisch eingestellt werden. Somit können in Abhängigkeit der jeweilig klassifizierten Gefahrensituation verschiedenste Straffungszustände der Sicherheitsgurte des Fahrzeugs 1 eingestellt, insbesondere dynamisch angepasst werden.

Diese kaskadierte Gurtstraffung kann insbesondere die jeweilige aktuell vorliegende beziehungsweise eingeschätzte Gefahrensituation berücksichtigen, als auch eine Änderung der Gefahrensituation. Insbesondere wird durch das elektronische Fahrzeugführungssystem 4 und insbesondere die dazugehörigen Systeme, insbesondere die elektronische Auswerteeinheit, eine permanente Analyse beziehungsweise Berechnung der aktuell vorliegenden Gefahrensituation getroffen. Somit kann bei auftretenden Änderungen der Gefahrensituation unverzüglich reagiert werden. Insbesondere spielen ebenfalls vorhergesagte Gefahrensituationen eine Rolle. Dabei kann die elektronische Auswerteeinheit 8 anhand aktueller Daten und bereitgestellten Informationen eine Vorhersage über die Bankettfahrt in dem vorliegenden Teilabschnitt des Banketts 10 treffen.

Eine zusätzliche hierzu vorgesehene Sicherheitsmaßnahme ist das Schließen sämtlicher Fahrzeugfenster des Fahrzeugs 1 und des Schiebedaches des Fahrzeugs 1, falls vorhanden. Somit können die Passagiere des Fahrzeugs 1 bestmöglich bei einer möglichen Kollision und/oder Unfall gesichert werden.

Zusätzlich kann als weitere Sicherheitsmaßnahme eine Stabilisierung einer Sitzposition der Passagiere, insbesondere des Fahrers 5, durchgeführt werden. Beispielsweise können hierzu seitliche Elemente 17 eines Fahrzeugsitzes 18 dynamisch eingestellt werden. Beispielsweise können diese über das Beaufschlagen mit Druckluft aufgepumpt werden, sodass der Fahrer 5 in Querrichtung des Fahrzeuges stabilisiert ist. Somit ist zum einen der Fahrer 5 durch die Gurtstraffung in Fahrzeuglängsrichtung gesichert und in Fahrzeugquerrichtung ist der über die eingestellten seitlichen Elemente 17 des Fahrzeugsitzes 18 stabilisiert beziehungsweise gesichert. Ebenfalls können solche Elemente in einem Kopfstützelement 19 einer Kopfstütze des Fahrzeugsitzes 18 eingestellt werden. Somit kann der Fahrer 5 bestmöglich geschützt werden.

In dem Ausführungsbeispiel der Fig. 2 ist in der Position P4 des Fahrzeugs 1 zu sehen, dass das Fahrzeug 1 wieder sicher die Fahrbahn 3 erreicht hat, sodass diese Bankettfahrt sicher entschärft werden konnte, insbesondere diese Situation deeskaliert werden konnte. In diesem Fall können die vorher getroffenen Sicherheitsmaßnahmen wieder deaktiviert und zurückgenommen werden. Insbesondere kann der Sicherheitsgurt 13 wieder in den ursprünglichen Zustand zurückversetzt werden.

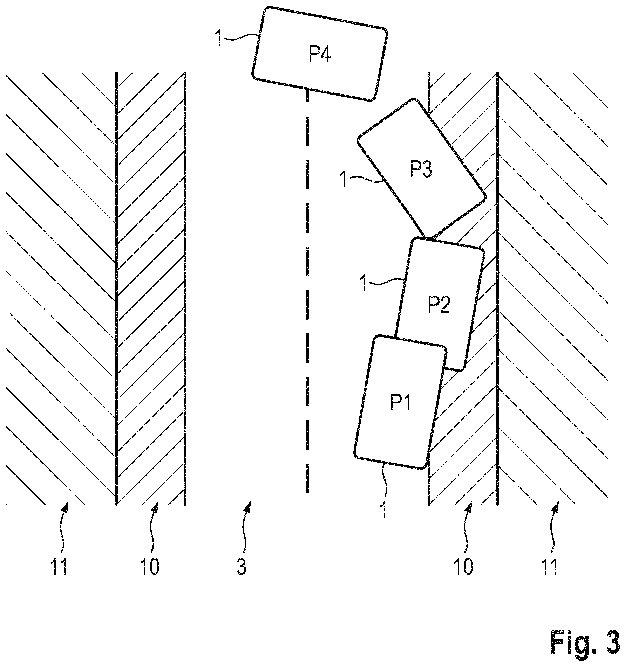

In der nachfolgenden Fig. 3 wird ein weiteres mögliches Gefahrenszenario beziehungsweise Gefahrensituation einer Bankettfahrt dargestellt. Hier verlässt das Fahrzeug ebenfalls die Fahrbahn 3 und fährt in das Bankett 10. Dabei sind hier die jeweiligen Situationen in der Position P1, P2 und P3 identisch wie in den Ausführungen der Fig. 2. Dabei ist hier die Gefahrensituation deutlich größer, denn wie in dem Vergleich zwischen der Position P3 und P4 des Fahrzeuges schematisch dargestellt, verlässt das Fahrzeug 1 das Bankett 10 dynamisch und droht in den Gegenverkehr oder gegen die andere Fahrbahnbegrenzung zu fahren. Dies wird insbesondere durch das elektronische Fahrzeugführungssystem 4 und insbesondere durch die elektronische Auswerteeinheit 8 festgestellt. Sollte dies der Fall sein, so führt dies beispielsweise zur Verschärfung der Pre-Crash-Maßnahmen. Die ESC-Funktionalität bleibt normal stabilisierend. Gegebenenfalls kann ein starkes Verzögern des Fahrzeugs 1 eingeleitet werden. Insbesondere kommt es hier aufgrund der Fahrzeugdynamik des Fahrzeugs 1, insbesondere durch Überschreitung von Grenzwerten, zu einem Ausbrechen beziehungsweise Schleudern des Fahrzeugs 1. Dies kann alleine durch den Fahrer 5 nicht mehr behoben werden. In diesem Fall kann zunächst mit Hilfe der Erfassungseinrichtung 7 der umliegende Bereich des Fahrzeugs 1 erfasst werden, sodass die aktuelle Gefahrensituation neu eingeschätzt werden kann. Zusätzlich wird in diesem Fall eine reversible Straffung der Sicherheitsgurte des Fahrzeugs 1 mit deutlich höheren Kräften zur Vermeidung einer Verlagerung der Passagiere des Fahrzeugs 1 durchgeführt. Die vorhin geschilderten weiteren Sicherheitsmaßnahmen werden hier ebenfalls aktiviert und beibehalten. Zusätzlich kann hier nun eine Gefahrenbremsung, insbesondere eine Notbremsung, zumindest ein Verzögerungsvorgang des Fahrzeugs 1 automatisch eingeleitet und durchgeführt werden. Somit kann ein sicheres Anhalten des Fahrzeugs 1 erreicht werden.

Als zusätzliche Möglichkeit könnte das elektronische Fahrzeugführungssystem 4 die Lenkmöglichkeit beziehungsweise ein Lenkwinkel eingestellt werden, sodass der Fahrer 5 nicht beliebig stark lenken kann. Somit könnten solch extreme Situationen vermieden werden. Ebenfalls können durch elektronische Fahrassistenzsysteme ein Durchdrehen der Räder minimiert beziehungsweise verhindert werden.

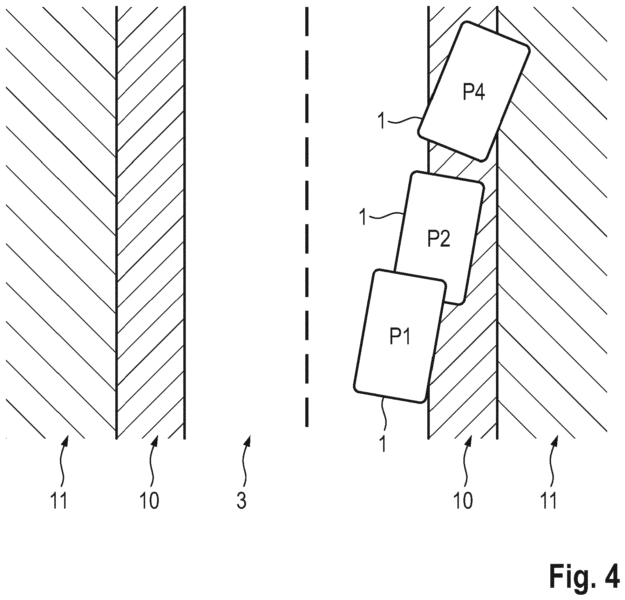

In der Fig. 4 ist nur ein weiteres mögliches Gefahrenszenario dargestellt. Dabei ist nun hier eine erhöhte Gefahrensituation dargestellt, da das Fahrzeug 1 vollständig von der Fahrbahn 3 abkommt und eventuell die komplette Kontrolle des Fahrzeugs 1 verliert. Die einzelnen Sicherheitsmaßnahmen, wie sie bereits vorher zu der jeweiligen Fahrzeugposition P1 und P2 aufgezählt wurden, sind hier ebenfalls aktiv, insbesondere hinsichtlich der geschilderten Sicherheitsmaßnahmen. Jedoch entfällt hier die Maßnahme bezüglich der Position P3, denn in diesem Fall kommt es zu keinerlei Reaktion des Fahrers 5. Beispielsweise ist der Fahrer aktuell unaufmerksam oder der Fahrer 5 hat einen Sekundenschlaf, beispielsweise. In diesem Fall findet keinerlei Rückführung des Fahrzeugs 1 auf die Fahrbahn 3 statt, sodass das Fahrzeug 1 zunächst vollständig das Bankett 10 befahren wird und eventuell auch noch den Bereich 11. Insbesondere kann in dieser Ausführungsform, außer bei der vorhin geschilderten Ausführungsform ab dem Erkennen der Bankettfahrt beziehungsweise des Befahrens des Banketts 10 eine Zeitdauer ermittelt werden, insbesondere ein Timer der elektronischen Auswerteeinheit 8 gestartet werden, um die Zeitdauer, wie lange das Fahrzeug 1 bereits das Bankett 10 befährt zu ermitteln. Dabei kann ab Erreichen eines zeitlichen Schwellwertes systemseitig entschieden werden, dass es zu keinerlei Gegenmaßnahmen und/oder Reaktionen des Fahrers 5 kommt. In diesem Fall kann nach dem Überschreiten einer vorgegebenen Zeitdauer und nach keinerlei Reaktionen des Fahrers 5 eine sofortige Notbremsung des Fahrzeugs 1 zufolge haben. Somit kann Schlimmeres verhindert werden, da automatisch sofort das Fahrzeug zum Stillstand gebracht werden kann.

Besonders in diesem Ausführungsbeispiel, und natürlich auch in allen anderen Ausführungsbeispielen, kann es bei einer längeren Fahrt auf dem Bankett 10 oder dem Bereich 11 vorkommen, dass Hindernisse, wie beispielsweise ein Baum oder eine Leitplanke oder ein anderes Hindernis auftreten. Da ist eine Überwachung der Hindernisse vor dem Fahrzeug durch die Erfassungseinrichtung 7 besonders wichtig. Diese Information bezüglich etwaiger Hindernisse ist besonders für den Notbremsvorgang beziehungsweise den Rückverzögerungsvorgang wichtig. Dabei kann zusätzlich berücksichtigt werden, dass die Reibwerte auf dem Bankett 10 und dem Bereich 11 deutlich abgesenkt und schlechter sind. Somit muss eine Notverzögerung frühzeitig eingeleitet werden, um noch einen ausreichend sicheren Bremsweg zur Verfügung zu stellen. Sollte der Fahrer 5 dem Hindernis ausweichen, so kann systemseitig versucht werden, dieser neuen Trajektorie zu folgen. Ebenfalls kann systemseitig ermittelt werden, ob ein Ausweichen überhaupt noch möglich ist. Für das Ausweichen kann beispielsweise durch das elektronische Fahrzeugführungssystem 4 eine erhöhte Querdynamik zugelassen werden. Sollte wie in der Fig. 3 dargestellt das Hineinfahren in den Gegenverkehr stattfinden, so kann systemseitig eine Reduzierung der Querdynamik des Fahrzeugs eingestellt werden, sodass ein Eintauchen in die Gegenfahrbahn minimiert werden kann. Die Querdynamik kann beispielsweise durch radselektive ESC-Eingriffe oder durch eine Lenkwinkelbegrenzung im "steer-by-wire" realisiert werden.

Ist ein Ausweichen beziehungsweise Anhalten nicht mehr möglich, wird der Bremsvorgang des Fahrzeuges 1 priorisiert um die Aufprallenergie zu reduzieren. Dabei kann mittels der Erfassungseinrichtung 7 der Wechsel zwischen der Fahrbahn 3 und dem Bankett 10 beobachtet werden, weil eventuell durch eine etwas größere Querablage, beispielsweise nur ein Rad kommt noch auf die Fahrbahn 3, eine größere Längsverzögerung nötig ist.

In jedem Fall ist die automatische Gurtstraffung von Vorteil, da durch die hohen Gurtkräfte kombiniert durch die maximal angesteuerte Krafteinwirkung des Sicherheitsgurtes 13 dafür gesorgt werden kann, dass die Insassen in den jeweiligen Positionen im Fahrzeugsitz 18 auch während eines Bremsvorgangs nicht mehr in Vorverlagerung geraten. Somit kann die Sicherheit der Fahrzeugpassagiere erhöht werden. Beispielsweise kann dann, wenn kein Hindernis vor einem Fahrzeug 1 vorliegt und der Fahrer 5 trotzdem später aus dem Bankett 10 lenkt, kann zuerst einmal von einem bewussten Wunsch des Fahrers 5 ausgegangen werden. Da hier trotzdem ein Schleudern verhindert werden sollte, empfiehlt es sich, die Bankettfunktion des elektronischen Fahrzeugführungssystems 4 mit erhöhten Einschaltgrenzen oder mit einer reduzierten Eingriffsstärke wirken zu lassen.

Insbesondere kann durch die geschilderten Ausführungsbeispiele der Erfindung in den Fig. 1 bis 4 ein abgestimmtes Vorgehen zwischen einer Bankettfunktion, insbesondere einer ESC-Funktion, und einer Pre-Crash-Maßnahme hergestellt werden. Insbesondere kann durch gleichzeitiges Sichern der Passagiere durch die automatische Gurtstraffung und das damit stattfindende Aufmerksamkeitstrigger kann die Sicherheit der Passagiere während Bankettfahrt erhöht werden.

Durch die vielfältigsten Informationen und die Einstufung der Gefahrensituation kann eine Risikominimierung während einer Bankettfahrt auch bei Hindernissen im Bankett oder bei Gegenverkehr durchgeführt werden.

Beispielsweise kann bei Fahrzeugen mit "steer-by-wire" es sinnvoll sein, beim Übergang von dem Bankett 10 wieder zurück auf die Fahrbahn 3 aufgrund von Reibwertdifferenzen die Lenkung noch ein Stück zurückzustellen. Hierdurch wird die erhöhte Querbeschleunigung bei einer Überfahrt auf die Fahrbahn 3 reduziert.

Insbesondere zeigen die Ausführungsbeispiele der Erfindung ein verbessertes abgestimmtes Verhalten der Funktionen bei der Fahrt ins Bankett 10.

Beispielsweise sind die Sicherheitsmaßnahmen dann von Relevanz, wenn das Fahrzeug 1 mit einer Geschwindigkeit zwischen 50 km/h und 100 km/h, insbesondere 120 km/h fährt.

### Bezugszeichenliste

- 1: Fahrzeug
- 2: Fortbewegungsfahrt
- 3: Fahrbahn
- 4: Elektronisches Fahrzeugführungssystem
- 5: Fahrer
- 6: Umgebung
- 7: Erfassungseinrichtung
- 8: Elektronische Auswerteeinheit
- 9: Cloudbasiertes System
- 10: Bankett
- 11: Bereich
- 12: Positionsbestimmungseinheit
- 13: Sicherheitsgurt
- 14: Rückhaltesystem
- 15: Ausgabeeinheit
- 16: Klassifizierungs-Datenbank
- 17: Sitzelement
- 18: Fahrzeugsitz
- 19: Kopfstützelement
- 20: Informationsstelle
- P1-P4: Positionen

## Patentansprüche

1. Verfahren zum automatischen Durchführen von Sicherheitsmaßnahmen bei einem Befahren eines zu einer Fahrbahn (3) verschiedenem Banketts (10) mit einem Fahrzeug (1), aufweisend folgende Schritte:
- Erfassen des zur Fahrbahn (3) verschiedenen Banketts (10), welches seitlich an die Fahrbahn (3) angrenzend angeordnet ist, durch eine Erfassungseinrichtung (7) des Fahrzeugs (1),
- Bereitstellen einer Information bezüglich einer Position und/oder einer Art des Banketts (10) an das Fahrzeug (1),
- Erkennen des Befahrens des Banketts (10) mit dem Fahrzeug (1) durch eine elektronische Auswerteeinheit (8),
- Beurteilen einer Gefahrensituation, die durch das Befahren des Banketts (10) des Fahrzeugs (1) einhergeht und/oder zukünftig einhergehen kann, durch die elektronische Auswerteeinheit (8),
- Durchführen einer Sicherheitsmaßnahme indem eine Straffung zumindest eines Sicherheitsgurts (13) eines Rückhaltesystems (14) des Fahrzeugs (1) in Abhängigkeit von der beurteilten Gefahrensituation erfolgt, und
- Informieren des Fahrers (5) über die Straffung des zumindest einen Sicherheitsgurts (13).

2. Verfahren nach Anspruch 1, wobei
mit der Erfassungseinrichtung (7) ein Umgebungsbereich in einer Umgebung (6) des Fahrzeugs (1) erfasst wird, und/oder mit einer Positionsbestimmungseinheit (12) eine aktuelle Position des Fahrzeugs (1) bestimmt wird, wobei in Abhängigkeit von dem erfassten Umgebungsbereich und/oder von der bestimmten Position durch die elektronische Auswerteeinheit (8) erkannt wird, ob sich das Fahrzeug (1) zumindest bereichsweise, insbesondere vollständig, auf dem Bankett (10) befindet, insbesondere ein Reibungskoeffizient eines Bodenbereichs, auf welchem das Fahrzeug (1) aktuell fährt, bestimmt wird, wobei der bestimmte Reibungskoeffizient für das Erkennen des Befahrens des Banketts (1) berücksichtigt wird.

3. Verfahren nach Anspruch 1 oder 2, wobei
in Abhängigkeit von der beurteilten Gefahrensituation Verkehrsteilnehmer in einer Umgebung (6) des Fahrzeugs (1) durch eine Beleuchtungseinrichtung (14) des Fahrzeugs (1) optisch, insbesondere vor dem Befahrens des Banketts (10) durch das Fahrzeugs (1), gewarnt werden, insbesondere in Abhängigkeit von der beurteilten Gefahrensituation ein akustischer und/oder optischer und/oder haptischer Warnhinweis einem Fahrer (5) des Fahrzeugs (1) durch eine elektronische Ausgabeeinheit (15) ausgegeben wird.

4. Verfahren nach einem der vorhergehenden Ansprüche, wobei
für das Beurteilen der Gefahrensituation des erkannten Befahrens des Banketts (10) eine Klassifizierungs-Datenbank (16) berücksichtigt wird, wobei mittels der Klassifizierungs-Datenbank (16) die Gefahrensituation klassifiziert wird, sodass die Gefahrensituation des Befahrens des Banketts (10) einem ersten Gefahrenszenario gemäß einer ersten Klasse oder zumindest einem zweiten Gefahrenszenario gemäß einer zweiten Klasse zugeordnet werden kann.

5. Verfahren nach Anspruch 4, wobei
in Abhängigkeit von der klassifizierten Gefahrensituation zumindest ein elektronisches Fahrerassistenzsystem dynamisch angepasst wird, sodass mit dem zumindest einen elektronischen Fahrerassistenzsystem automatisch weitere Sicherheitsmaßnahmen eingeleitet, insbesondere durchgeführt, werden, insbesondere als eine weitere Sicherheitsmaßnahme eine Stabilisierung einer Sitzposition zumindest eines Passagiers (5) des Fahrzeugs (1) in einem Fahrzeugsitz (18) durchgeführt wird, insbesondere ab dem Erkennen des Befahrens des Banketts (10) durch das Fahrzeug (1) eine Zeitdauer des Befahrens des Banketts (10) ermittelt wird, wobei bei einer Überschreitung eines vorgegebenen Schwellwerts durch die ermittelte Zeitdauer automatisch ein Verzögerungsvorgang, insbesondere ein Notbremsvorgang, des Fahrzeugs (1) durchgeführt wird.

6. Verfahren nach einem der vorhergehenden Ansprüche, wobei
für das Beurteilen der Gefahrensituation des Befahrens des Banketts (10) ein zur Fahrbahn (3) und zum Bankett (10) verschiedener Bereich (11) in einer Umgebung (6) des Banketts (10), welcher sich unmittelbar an das Bankett (10) anschließt, berücksichtigt wird, insbesondere mit der Erfassungseinrichtung (7) dieser Bereich (11) zusätzlich erfasst wird.

7. Verfahren nach einem der vorhergehenden Ansprüche, wobei
die Straffung des zumindest einen Sicherheitsgurts (13) des Rückhaltesystems (14) des Fahrzeugs (1) in Abhängigkeit von der beurteilten Gefahrensituation kaskadiert durchgeführt wird, insbesondere ein Straffungszustand des zumindest einen Sicherheitsgurts (13) in Abhängigkeit von der Gefahrensituation und/oder einer Änderung der Gefahrensituation angepasst wird, insbesondere beim Erkennen des Befahrens des Banketts (10) ein erster Straffungszustand des zumindest einen Sicherheitsgurts (13) eingestellt wird, und in Abhängigkeit von der Gefahrensituation und/oder der Änderung der Gefahrensituation ein zum ersten Straffungszustand strafferen zweiten Straffungszustand des zumindest einen Sicherheitsgurts (13) eingestellt wird.

8. Verfahren nach einem der vorhergehenden Ansprüche, wobei
zumindest eine Information bezüglich des erkannten Befahrens des Banketts (10) in einer digitalen Karte gespeichert wird, wobei diese Information bei einer zukünftigen Beurteilung einer Gefahrensituation eines Befahrens eines Banketts (10) durch ein Fahrzeug berücksichtigt wird, insbesondere die elektronische Auswerteeinheit (8) für das Beurteilen der Gefahrensituation mit einem Maschinenlernalgorithmus in Abhängigkeit von der digitalen Karte und/oder weiteren Informationen bezüglich eines Befahrens eines Banketts (10) maschinell trainiert wird.

9. Elektronisches Fahrzeugführungssystem (4) mit einer Erfassungseinheit (7) und einer elektronischen Auswerteeinheit (8), wobei das elektronische Fahrzeugführungssystem (4) zum Durchführen eines Verfahrens nach einem der Ansprüche 1 bis 8 ausgebildet ist.

10. Fahrzeug (1) mit einem elektronischen Fahrzeugführungssystem (4) nach Anspruch 9.

## Claims

1. A method for automatically carrying out safety measures when a vehicle (1) drives on a shoulder (10) different from a roadway (3), comprising the following steps:
- detecting the shoulder (10) which differs from the roadway (3) and laterally adjoins the roadway (3) by means of a detection apparatus (7) of the vehicle (1),
- providing information regarding the position and/or type of the shoulder (10) to the vehicle (1),
- recognizing that the vehicle (1) is driving on the shoulder (10) by means of an electronic evaluation unit (8),
- evaluating a dangerous situation which accompanies the driving of the vehicle (1) on the shoulder (10) and/or can accompany the same in the future, by means of the electronic evaluation unit (8),
- carrying out a safety measure by tensioning at least one safety belt (13) of a restraint system (14) of the vehicle (1) depending on the evaluated dangerous situation, and
- informing the driver (5) about the tensioning of the at least one safety belt (13).

2. The method according to claim 1, wherein
the detection apparatus (7) is used to detect a surrounding area in an surroundings (6) of the vehicle (1) and/or a position determining unit (12) is used to determine a current position of the vehicle (1), wherein depending on the detected surrounding region and/or on the determined position, the electronic evaluation unit (8) recognizes if the vehicle (1) is at least partially, in particular completely, on the shoulder (10), in particular, a coefficient of friction of a ground region on which the vehicle (1) is currently driving is determined, wherein the specific coefficient of friction is taken into account for the recognition of driving on the shoulder (1).

3. The method according to either claim 1 or claim 2, wherein
depending on the evaluated dangerous situation, road users in the surroundings (6) of the vehicle (1) are visually warned by a lighting apparatus (14) of the vehicle (1), in particular before the vehicle (1) drives onto the shoulder (10), in particular, depending on the evaluated dangerous situation, an acoustic and/or visual and/or haptic warning is output to a driver (5) of the vehicle (1) by an electronic output unit (15).

4. The method according to any of the preceding claims, wherein
a classification database (16) is consulted for evaluating the dangerous situation of the recognized driving on the shoulder (10), wherein the dangerous situation is classified by means of the classification database (16) so that the dangerous situation of driving on the shoulder (10) can be assigned to a first dangerous scenario in accordance with a first class, or at least to a second dangerous scenario in accordance with a second class.

5. The method according to claim 4, wherein
depending on the classified dangerous situation, at least one electronic driver assistance system is dynamically adjusted so that additional safety measures are automatically initiated, in particular carried out, with the at least one electronic driver assistance system, in particular, a stabilization of a seating position of at least one passenger (5) of the vehicle (1) in a vehicle seat (18) is carried out as an additional safety measure, in particular a duration of the driving on the shoulder (10) is determined when the driving on the shoulder (10) by the vehicle (1) is detected, wherein a deceleration process, in particular an emergency braking process, of the vehicle (1) is automatically carried out if a specified threshold value is exceeded by the determined duration.

6. The method according to any of the preceding claims, wherein
in order to evaluate the dangerous situation of driving on the shoulder (10), a region (11) in the surroundings (6) of the shoulder (10) which is different from the roadway (3) and the shoulder (10) and which directly abuts the shoulder (10) is taken into account, in particular, this region (11) is additionally detected by the detection apparatus (7).

7. The method according to any of the preceding claims, wherein
the tensioning of the at least one safety belt (13) of the restraint system (14) of the vehicle (1) is carried out in a cascaded manner depending on the evaluated dangerous situation, in particular, a tensed state of the at least one safety belt (13) is adjusted depending on the dangerous situation and/or a change in the dangerous situation, in particular, a first tensed state of the at least one safety belt (13) is set upon recognizing the driving on the shoulder (10), and a second tensed state of the at least one safety belt (13), which is tighter than the first tensed state, is set depending on the dangerous situation and/or the change in the dangerous situation.

8. The method according to any of the preceding claims, wherein
at least one piece of information relating to the recognized driving on the shoulder (10) is saved in a digital map, wherein this information is taken into account in a future evaluation of a dangerous situation of a vehicle driving on a shoulder (10), in particular, the electronic evaluation unit (8) for evaluating the dangerous situation is machine-trained with a machine learning algorithm depending on the digital map and/or other information relating to driving on a shoulder (10).

9. An electronic vehicle guidance system (4) with a detection unit (7) and an electronic evaluation unit (8), wherein the electronic vehicle guidance system (4) is designed to carry out a method according to any of claims 1 to 8.

10. A vehicle (1) with an electronic vehicle guidance system (4) according to claim 9.

## Revendications

1. Procédé pour l'exécution automatique de mesures de sécurité lors du passage d'un véhicule (1) sur un accotement (10) différent d'une voie de circulation (3), présentant les étapes suivantes :
- détection de l'accotement (10) différent de la voie de circulation (3), qui est agencé latéralement de manière adjacente à la voie de circulation (3), par un dispositif de détection (7) du véhicule (1),
- fourniture au véhicule (1) d'une information concernant une position et/ou un type de l'accotement (10),
- reconnaissance du passage du véhicule (1) sur l'accotement (10) par une unité d'évaluation électronique (8),
- jugement par l'unité d'évaluation électronique (8) d'une situation de danger qui est associée et/ou qui peut être associée à l'avenir au passage sur l'accotement (10) du véhicule (1),
- exécution d'une mesure de sécurité en effectuant une tension d'au moins une ceinture de sécurité (13) d'un système de retenue (14) du véhicule (1) en fonction de la situation de danger jugée, et
- information du conducteur (5) de la tension de l'au moins une ceinture de sécurité (13).

2. Procédé selon la revendication 1, dans lequel
une zone environnante est détectée dans un environnement (6) du véhicule (1) à l'aide du dispositif de détection (7), et/ou une position actuelle du véhicule (1) est déterminée à l'aide d'une unité de détermination de position (12), dans lequel l'unité d'évaluation électronique (8) reconnaît, en fonction de la zone environnante détectée et/ou de la position déterminée, si le véhicule (1) se trouve au moins par zones, en particulier complètement, sur l'accotement (10), en particulier un coefficient de frottement d'une zone de sol sur laquelle le véhicule (1) se déplace actuellement est déterminé, dans lequel le coefficient de frottement déterminé est pris en compte pour la reconnaissance du passage sur l'accotement (1).

3. Procédé selon la revendication 1 ou 2, dans lequel
en fonction de la situation de danger jugée, des usagers de la route dans un environnement (6) du véhicule (1) sont avertis optiquement par un dispositif d'éclairage (14) du véhicule (1), en particulier avant que le véhicule (1) ne passe sur l'accotement (10), en particulier en fonction de la situation de danger jugée, une indication d'avertissement acoustique et/ou optique et/ou haptique est délivrée à un conducteur (5) du véhicule (1) par une unité de sortie électronique (15).

4. Procédé selon l'une des revendications précédentes, dans lequel
une base de données de classification (16) est prise en compte pour le jugement de la situation de danger du passage reconnu sur l'accotement (10), dans lequel la situation de danger est classifiée par le biais de la base de données de classification (16), de sorte que la situation de danger du passage sur l'accotement (10) peut être attribuée à un premier scénario de danger selon une première classe ou au moins à un second scénario de danger selon une seconde classe.

5. Procédé selon la revendication 4, dans lequel
en fonction de la situation de danger classifiée, au moins un système d'assistance au conducteur électronique est adapté de manière dynamique, de sorte que d'autres mesures de sécurité sont initiées, en particulier exécutées, automatiquement avec l'au moins un système d'assistance au conducteur électronique, en particulier une stabilisation d'une position assise d'au moins un passager (5) du véhicule (1) dans un siège de véhicule (18) est exécutée comme une autre mesure de sécurité, en particulier à partir de la reconnaissance du passage du véhicule (1) sur l'accotement (10), une durée du passage sur l'accotement (10) est identifiée, dans lequel un processus de décélération, en particulier un processus de freinage d'urgence, du véhicule (1) est exécuté automatiquement en cas de dépassement d'une valeur seuil prédéfinie par la durée identifiée.

6. Procédé selon l'une des revendications précédentes, dans lequel
pour le jugement de la situation de danger du passage sur l'accotement (10), une zone (11) différente de la voie de circulation (3) et de l'accotement (10) est prise en compte dans un environnement (6) de l'accotement (10), zone qui se raccorde directement à l'accotement (10), en particulier cette zone (11) est détectée en complément avec le dispositif de détection (7).

7. Procédé selon l'une des revendications précédentes, dans lequel
la tension de l'au moins une ceinture de sécurité (13) du système de retenue (14) du véhicule (1) est exécutée en cascade en fonction de la situation de danger jugée, en particulier un état de tension de l'au moins une ceinture de sécurité (13) est adapté en fonction de la situation de danger et/ou d'une modification de la situation de danger, en particulier lors de la reconnaissance du passage sur l'accotement (10), un premier état de tension de l'au moins une ceinture de sécurité (13) est réglé, et en fonction de la situation de danger et/ou de la modification de la situation de danger, un second état de tension de l'au moins une ceinture de sécurité (13) plus tendue que le premier état de tension est réglé.

8. Procédé selon l'une des revendications précédentes, dans lequel
au moins une information concernant le passage reconnu sur l'accotement (10) est mémorisée dans une carte numérique, dans lequel cette information est prise en compte lors d'un jugement futur d'une situation de danger d'un passage sur un accotement (10) par un véhicule, en particulier l'unité d'évaluation électronique (8) pour le jugement de la situation de danger est entraînée par machine avec un algorithme d'apprentissage automatique en fonction de la carte numérique et/ou d'autres informations concernant un passage sur un accotement (10).

9. Système de guidage de véhicule électronique (4) comportant une unité de détection (7) et une unité d'évaluation électronique (8), dans lequel le système de guidage de véhicule électronique (4) est conçu pour exécuter un procédé selon l'une des revendications 1 à 8.

10. Véhicule (1) comportant un système de guidage de véhicule électronique (4) selon la revendication 9.
